# EUROPEAN PATENT SPECIFICATION

(11) **EP 4 038 597 B1**
(45) Date of publication and mention of the grant of the patent: **12.06.2024**
(21) Application number: 20786498.4
(22) Date of filing: 30.09.2020
(51) Int. Cl.: G08B 25/00, G08B 13/08, G08B 25/08

(54) **A SECURITY MONITORING SYSTEM**
SICHERHEITSÜBERWACHUNGSSYSTEM
SYSTÈME DE SURVEILLANCE DE SÉCURITÉ

(30) Priority: 30.09.2019 ES 201930847
(43) Date of publication of application: 10.08.2022
(60) Divisional application: 24166223.8
(73) Proprietor: Verisure Sàrl, 1290 Versoix, Geneva (CH)
(72) Inventor: IGLESIAS, Angel Francisco Piorno, 1290 Versoix, Geneva (CH); ECHEVERRIA, Jon Noble, 1290 Versoix, Geneva (CH)
(74) Representative: Prinz & Partner mbB
(86) International application number: PCT/EP2020/077378
(87) International publication number: WO 2021/064027

(56) References cited:
- US-A1- 2016 117 913
- US-A1- 2017 039 843
- US-A1- 2017 109 998

## Description

### Technical field

The present invention relates to a security monitoring system for monitoring premises, a portable authentication device for use with a security monitoring system, and a method of operating such a portable authentication device.

### Background

Security monitoring systems for monitoring premises, often referred to as alarm systems, typically provide a means for detecting the presence and/or actions of people at the premises, and reacting to detected events. Commonly such systems include sensors to detect the opening and closing of doors and windows, movement detectors to monitor spaces (both within and outside buildings) for signs of movement, microphones to detect sounds such as breaking glass, and image sensors to capture still or moving images of monitored zones. Such systems may be self-contained, with alarm indicators such as sirens and flashing lights that may be activated in the event of an alarm condition being detected. Such installations typically include a control unit (which may also be termed a central unit), generally mains powered, that is coupled to the sensors, detectors, cameras, etc. ("nodes"), and which processes received notifications and determines a response. The central unit may be linked to the various nodes by wires, but increasingly is instead linked wirelessly, rather than by wires, since this facilitates installation and may also provide some safeguards against sensors/detectors effectively being disabled by disconnecting them from the central unit. Similarly, for ease of installation and to improve security, the nodes of such systems typically include an autonomous power source, such as a battery power supply, rather than being mains powered.

As an alternative to self-contained systems, a security monitoring system may include an installation at a premises, domestic or commercial, that is linked to a Central Monitoring Station (CMS) where, typically, human operators manage the responses required by different alarm and notification types. In such centrally monitored systems, the central unit at the premises installation typically processes notifications received from the nodes in the installation, and notifies the Central Monitoring Station of only some of these, depending upon the settings of the system and the nature of the detected events. In such a configuration, the central unit at the installation is effectively acting as a gateway between the nodes and the Central Monitoring Station. Again, in such installations the central unit may be linked by wires, or wirelessly, to the various nodes of the installation, and these nodes will typically be battery rather than mains powered.

In both these types of systems, the central unit is typically responsible for arming and disarming the system but may not be located close to an entrance door. When the house owner returns to the monitored premises where the monitoring system is in an armed state, the system must be disarmed fairly quickly, for example within 30 seconds of opening the door. If the central unit is not located close to the entrance door, it may be difficult for the owner to reach the central unit and enter the disarm code - which may typically be 4 to 6 characters or digits, in time. This obviously poses an even greater challenge for the elderly or infirm. For this reason it is known to provide a unit close to the entrance door by means of which the owner can disarm the system. Such a unit, which may be termed a disarm node, may be provided inside the protected premises close to each main entrance, but in other installations only the single main entrance will be provided with a disarm node. The disarm node will typically be fixed, for example to a wall or other surface of the premises, close to the relevant entrance to the building or protected space. Some installations may be so configured that the system can only be armed or disarmed by means of a disarm node, the central unit possibly not even including a keypad or NFC functionality.

Although the provision of a disarm node adjacent the entrance to the protected premises means that the householder doesn't have to walk all the way to the central unit to enter the disarm code, there are occasions when it is inconvenient to have to enter the disarm code manually even through a disarm node. For example, if the householder is carrying an infant, packages, or is otherwise encumbered, or if the householder is on crutches, it may still be extremely inconvenient to have to enter a disarm code manually. And under such circumstances it can similarly be extremely inconvenient for a user to have to present a portable authentication device or "dongle" physically to a disarm node -for example by touching the disarm node with the dongle, since like manually entering a disarm code this requires the user to have a "free" hand to enable the dongle to be presented.

It would be desirable to be able to reduce or even eliminate this problem while still retaining a high level of security.

US2017/039843 A1 concerns systems and methods grant immunity from a monitoring system. For example, a monitoring system comprises a portable device configured to communicate a unique identifier with a registration signal, and a monitoring system. The monitoring system comprises a database including the unique identifier, a sensor configured to detect a condition, and a controller configured to receive a detection signal from the sensor when the condition is detected. The monitoring system grants immunity from the sensor to the portable device when the registration signal is received by the monitoring system.

US2017/109998A1 concerns security and/or automation systems that may enable a user to deactivate a security portion of an automation system using a mobile device. An automation system may detect the presence of an authorized mobile device which may modify a status of at least one component of the automation system. The automation system may be installed at a user's residence and may identify when the user's mobile device enters a geographical region surrounding the residence. Modifying a status of at least one component may include deactivating a security component of the automation system. This may enable the user to enter the residence without the need to enter a code into a control panel.

US2016/117913A1 concerns a security system comprises a system control panel for arming and disarming the security system. A door sensing unit comprises a first radio frequency RF transceiver interconnected with the system control panel over a network. The first RF transceiver is mounted proximate to a door that defines at least a portion of a perimeter around an area to be monitored by the security system. The first RF transceiver has an RF detection field proximate to the door. A disarm device comprises a second RF transceiver that automatically transmits a disarm device packet. The first RF transceiver receives the disarm device packet when the second RF transceiver is within the RF detection field. The first RF transceiver sends a disarm message to the system control panel over the network to disarm the security system based on at least the disarm device packet.

Embodiments of the invention enable hands-free disarming of a security monitoring system while retaining a high level of security. That is, embodiments of the invention provide a system in which secure and appropriate disarming can be achieved by a user with a portable authentication device (e.g. a fob or other physical token) without the need for the user to take any action (other than carrying the portable authentication device on or about their person).

### Summary of the invention

According to a first aspect, the present invention provides a portable authentication device for use with a security monitoring system for a building or a secured space within a building or other fixed property, the system including:
a control unit for controlling, arming and disarming the security monitoring system;
a detector to detect the breaching of an entrance giving access to the building or the secured space;
a disarm node for disarming the system, the disarm node having a user interface to receive a user input to disarm the system, and a radio frequency transmitter to transmit, in consequence of the user input, a disarm signal to the control unit; the portable authentication device comprising:
   a radio frequency transceiver,
   a memory storing a portable authentication device ID,
   a motion sensor
   and a processor operatively connected to the transceiver, the motion sensor and the memory;
      wherein the motion sensor is configured to sense motion of the portable authentication device and to provide an output based on sensed motion of the portable authentication device, and wherein the processor is configured to determine whether the portable authentication device is stationary or in motion, based on the output of the motion sensor;
      wherein the portable authentication device is configured to receive a disarm instruction, via the transceiver from the disarm node to transmit to the control unit a disarm request containing the portable authentication device ID; and wherein the processor is configured to transmit the instructed disarm request only if, when the instruction is received, the portable authentication device is not deemed to be stationary.

User convenience is improved over known systems by providing a portable authentication device that enables hands free disarming, and by including a motion sensor and having the portable authentication device only provide the instructed disarm message if, when the instruction is received, the portable authentication device is not deemed to be stationary, security is enhanced because a portable authentication device left in the vicinity of the disarm node, rather than carried by someone opening the door, will not transmit a disarm message to the control unit. This means that if a bad actor opens the door to enter the secured space, the system will not automatically disarm as a consequence of a portable authentication device having been left in the vicinity of the relevant disarm node.

Preferably the portable authentication device is configured to transmit to the control unit the disarm request including a disarm transmission identifier received in the disarm instruction from the disarm node. By changing the disarm transmission identifier between disarm events it is it harder for bad actors to fool the system. The disarm transmission identifiers may, for example, be random numbers or may be selected from a large pool of numbers and vary between each disarm event. In this way, the security of the system is improved against for example the replaying of a recording of an authentic transmission.

A portable authentication device according to the first aspect may be deemed to be stationary if the motion sensor senses no motion at the time the instruction is received.

Alternatively, a portable authentication device according to the first aspect may be deemed to be stationary if the motion sensor has sensed no motion of the portable authentication device during a predetermined period preceding the time when the instruction is received.

A portable authentication device according to the first aspect may be further configured to receive an instruction other than a disarm instruction via the transceiver, including a flag, from the control unit to perform an action; and wherein in the event that the other instruction includes the flag, the processor is configured to cause the portable authentication device to perform the instructed action whether or not, when the instruction is received, the portable authentication device is determined to be stationary.

Portable authentication devices configured in this way can be activated by an RF signal, from the control unit or from a disarm node, enabling the status of all portable authentication devices in range to be checked and/or updated. It would also be possible to perform an audit of all the portable authentication devices in range of, say, the control unit. If such a portable authentication device were to include one or more of a visual indicator, an audio transducer, a haptic transducer, and were further configured to generate an output using one or more of these when so instructed by a received instruction including the flag, a mislaid portable authentication device could be made to announce itself.

A portable authentication device according to the first aspect may have its processor configured to cease generating a running count of the time since the portable authentication device was last in motion after the count of the time since the portable authentication device was last in motion reaches a predetermined threshold value. That is, the processor may stop counting once a predetermined threshold is reached, or there may be another, higher threshold which determines when the processor stops counting. This helps to reduce processor energy consumption, which is beneficial for battery life.

Any of these portable authentication devices could be configured to receive the disarm instruction on a first radio channel, the disarm instruction including instructions to transmit the disarm message containing the disarm transmission identifier (if used) and the portable authentication device ID on a second radio channel whose transmission parameters are different from those of the first radio channel and are specified in the received instructions; and to control the transceiver to transmit the message containing the transmission identifier (if used) and the portable authentication device ID on the second radio channel using the specified transmission parameters.

By arranging for the portable authentication device to send the message containing the disarm transmission identifier (if used) and the portable authentication device ID on the second radio channel on a channel whose specified transmission parameters differ from those on which the disarm instruction message was received, and which are specified in the instruction from the control unit, it is harder for bad actors to impersonate a valid portable authentication device and hence the security of the system is enhanced.

According to a second aspect, the present invention provides a security monitoring system for a building or a secured space within a building or other fixed property, the system including:
a detector to detect the breaching of an entrance giving access to the building or the secured space;
a control unit;
a disarm node for disarming the system, the node having a user interface to receive a user input to disarm the system, and a radio frequency transmitter to transmit, in consequence of the user input, a disarm signal to the control unit;
and a portable authentication device according to the first aspect to permit hands-free disarming of the security monitoring system;
the control unit having a radio frequency transceiver, and a memory storing a portable authentication device identity for the portable authentication device;
the control unit being configured:
   in response to receiving a notification of an entrance breach from the detector, to:
   (i) start an entry period timer;
   (ii) transmit a wake up message to the disarm node to cause the RF transmitter of the disarm node to transmit a wake up signal/beacon to wake the portable authentication device; and
   (iii) in response to receiving, before expiry of the entry period timer, a radio frequency disarm signal from the portable authentication device that includes the registered portable authentication device identity, to disarm the security monitoring system; and
   (iv) in the event that the security monitoring system is not disarmed before expiry of the entry period, to cause the security monitoring system to enter an alarm state;
   (v) wherein, additionally either: the control unit is configured to start a hands-free disarm timer in response to receiving an entrance breach notification from the detector, and in the event that no RF signal including the registered portable authentication device identity is received before the hands-free disarm timer expires, to transmit a signal to the node to cause the node to provide a notification to the effect that the attempted hands-free disarm has failed; or
   (vi) the disarm node is configured to start its own hands-free disarm timer in response to receiving the wake up message from the control unit, and, in the event that the hands-free disarm timer of the disarm node expires without the disarm node having been informed by the control unit of disarming of the security monitoring system, to provide a notification to the effect that the attempted hands-free disarm has failed.

Such a security monitoring system provides user convenience while also enabling provision of a high level of system security.

In the security monitoring system according to the second aspect of the invention the control unit may be configured to:
include a disarm transmission identifier in the wake up message, and the wake up message is arranged to cause the disarm node to include the disarm transmission identifier in the wake up signal/beacon transmitted from the RF transmitter of the disarm node;
only disarm the security monitoring system in response to receiving before expiry of the entry period timer a radio frequency disarm signal including the registered portable authentication device identity from the portable authentication device if the disarm signal also includes the disarm transmission identifier; and
in the case that the control unit is configured to start a hands free disarm timer, to transmit a signal to cause the disarm node to provide a notification to the effect that the attempted hands-free disarm has failed only if no RF signal including the registered portable authentication device identity and the disarm transmission identifier is received before the hands-free disarm timer expires. By changing the disarm transmission identifier between disarm events it is it harder for bad actors to fool the system. The disarm transmission identifiers may, for example, be random numbers or may be selected from a large pool of numbers and vary between each disarm event. In this way, the security of the system is improved.

In security monitoring systems according to the second aspect the portable authentication device may be deemed to be stationary if the motion sensor senses no motion at the time the instruction is received.

Alternatively, in security monitoring systems according to the second aspect the portable authentication device may be deemed to be stationary if the motion sensor has sensed no motion of the portable authentication device during a predetermined period preceding the time when the instruction is received.

In security monitoring systems according to the second aspect the portable authentication device may have its processor configured to cease generating a running count of the time since the portable authentication device was last in motion after the count of the time since the portable authentication device was last in motion reaches a predetermined threshold value. That is, the portable authentication device 's processor may stop counting once the predetermined threshold is reached, or there may be another, higher threshold which determines when the processor stops counting. This helps to reduce processor energy consumption, which is beneficial for battery life.

A security monitoring system according to the second aspect of the invention may include multiple disarm nodes each associated with different entrance giving access to the building or the secured space, each disarm node having a unique disarm node ID, each of the different entrances having a respective detector with a different respective ID, and the control unit storing the disarm node IDs, the detector IDs, and an association between each detector and an associated one of the disarm nodes; wherein the control unit is configured, in response to receiving an entrance breach message from a detector, to use a detector identifier included in the received message to identify the associated disarm node and to include the disarm node identifier for the identified disarm node in the transmitted wake-up message to selectively target the identified disarm node among the multiple disarm nodes of the system.

The selective targeting of the disarm node associated with the entrance whose breaching has been sensed improves security by ensuring that disarm is not caused by the presence of a portable authentication device in the vicinity of some other disarm node.

According to a third aspect, the present invention provides a method of operating a portable authentication device for use with a security monitoring system for a building or a secured space within a building or other fixed property, the system including: a control unit for controlling, arming and disarming the security monitoring system; a detector to detect the breaching of an entrance giving access to the building or the secured space; a disarm node for disarming the system, the disarm node having a user interface to receive a user input to disarm the system, and a radio frequency transmitter to transmit, in consequence of the user input, a disarm signal to the control unit;
the portable authentication device comprising: a radio frequency transceiver, a memory storing a portable authentication device ID,
a motion sensor, and a processor operatively connected to the transceiver, the motion sensor and the memory; the method comprising: using the motion sensor to sense motion of the portable authentication device;
providing an output based on sensed motion of the portable authentication device; determining, using the processor, whether the portable authentication device is stationary or in motion, based on the output of the motion sensor;
providing an output based on sensed motion of the portable authentication device;
determining, using the processor, whether the portable authentication device is stationary or in motion, based on the output of the motion sensor;
receiving a disarm instruction, via the transceiver, from the disarm node to transmit to the control unit a disarm request containing the portable authentication device ID; and when the instruction is received, determining whether the portable authentication device is deemed to be stationary;
and, only if the portable authentication device is deemed not to be stationary, transmitting the instructed request.

In the method according to the third aspect, the disarm instruction received by the transceiver includes a disarm transmission identifier and an instruction to include the disarm transmission identifier in the disarm request. By changing the disarm transmission identifier between disarm events it is it harder for bad actors to fool the system. The disarm transmission identifiers may, for example, be random numbers or may be selected from a large pool of numbers and vary between each disarm event. In this way, the security of the system is improved.

In the method according to the third aspect, the portable authentication device may be deemed to be stationary if the motion sensor senses no motion at the time the instruction is received.

Alternatively, in the method according to the third aspect, the portable authentication device may be deemed to be stationary if the motion sensor has sensed no motion of the portable authentication device during a predetermined period preceding the time when the instruction is received.

For the various embodiments of the present invention, in many domestic installations all the monitored entrances may be doorways fitted with doors, and monitoring for a breach may involve detecting the opening of a door, or the passage of a person through a doorway. But some or all of the monitored entrances may not include doors or other closures, so that detection of a breach may involve using a movement or visual sensor to detect the presence or movement of a person at or through an entrance such as a path, passageway or other opening.

Embodiments of the invention will now be described, by way of example only, with reference to the accompanying drawings, in which:
Figure 1 is an overview of a security monitoring system according to a first aspect of the invention;
Figure 2 is a schematic drawing showing a stylised building in which a security monitoring system according to an embodiment of the invention is installed;
Figure 3 is a timing diagram illustrating a method of controlling a security monitoring system according to an embodiment of the invention;
Figure 4 is a schematic drawing showing features of elements of the security monitoring system according to an embodiment of the invention;
Figure 5 is a flowchart illustrating an aspect of the operation of a portable authentication device according to an embodiment of the invention;
Figure 6 is a schematic drawing illustrating an arrangement of elements of a security monitoring system according to an embodiment of the invention;
Figure 7 is a schematic drawing illustrating operation of the receiver function of the portable authentication device and a possible packet structure for a transmission from a disarm node; and
Figures 8a and 8b are schematic drawings illustrating a security monitoring system according to an embodiment of the invention in which a disarm node is provided outside the zone or building protected by the system.

### Specific description

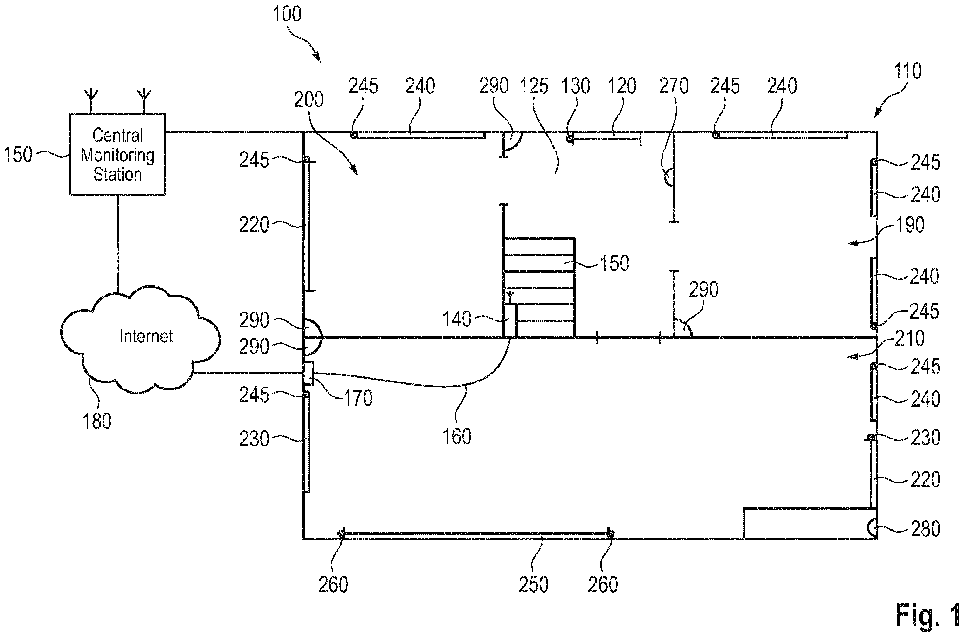

Figure 1 is an overview of a security monitoring system according to a first aspect of the invention. The Figure shows a rough plan view of a domestic dwelling 110, which may be a building such as a house or a secured space, such as an apartment, in a building and which is protected by a security monitoring system 100. The dwelling has a front door 120, in a doorway that is a main entrance giving access to the entrance hall 125 of the building or the secured space. The door 120 is fitted with a door sensor 130 to detect the opening of the door. The door sensor 130 is typically, but not necessarily, a magnetically triggered switch which is fitted to the opening side of the door, opposite to the hinge side. It will be appreciated that the door sensor is an example of a detector to detect the breaching of the entrance represented by the doorway. It will also be appreciated that the breaching of an entrance may also be detected using a motion sensor such as a PIR sensor, a video camera or other image sensor, a floor-mounted pressure sensor, or some other contact or non-contact sensor, any of which may be used to detect the breaching of an entrance into a building, garden, farm, etc., and which may therefore generate an alarm trigger signal to indicate the breaching of a monitored entrance.

The door sensor 130 includes an RF transmitter, not shown, that transmits an entry violation signal to a central unit 140 of the monitoring system 100 in the event that the door is opened.

In this installation, the control or central unit 140 is mounted under the stairs 150 that lead to an upper floor. The control unit includes at least one first RF transceiver to receive transmissions from the door sensor and other nodes of the system. The central unit communicates with a Central Monitoring Station 150 either through a wired connection via a wired data link 160 to a broadband connection 170 within the premises to the Internet 180, or wirelessly, typically using a second transceiver. The control unit may also communicate using a Wi-Fi connection, for example to a Wi-Fi access point that gives access to the Internet over a broadband or other data link. The first RF transceiver(s) for communication with the nodes of the system will typically use an ISM (Industrial Scientific and Medical) band, such as the 868MHz band in Europe. The first RF transceiver(s) may also support Bluetooth. The second transceiver, for communication with the Central Monitoring Station 150 may also be able to use an ISM band, such as the 868 MHz band in Europe, but may also be able to use a mobile (PLMN) network such as GSM 3G, 4G, or UMTS. Preferably the central unit 140 has several ways of communicating with the Central Monitoring Station 150, so that even if one route is jammed or otherwise unavailable, the central unit is still able to report to, and receive communications from, the Central Monitoring Station.

The residence of Figure 1 includes several rooms 190, 200, 210, in addition to the entrance hall 125. Rooms 190 and 200 lead off the entrance hall, and have windows 240 but no external doors. Typically all of the windows will be provided with one or more sensors 245 to detect window opening, glass breakage, tampering or the like. Room 210 is a combined kitchen and dining room which has an external entrance door 220, which is also fitted with a door sensor 230. The kitchen dining room 210 also has a row of sliding and folding glazed doors 250, which constitute an entrance for which door sensors 260 are also provided. As is conventional, the system also includes motion detectors, such as PIR detectors 290 to monitor all or selected ones of the rooms or spaces within the building, some or all of which may have associated image capture devices such as video cameras. These or other motion sensors may also be used to detect the breaching of an entrance, such as the opening of an entrance door, instead of utilising a door sensor such as a magnetic contact device. The system may also include one or more microphones to detect, and capture, sounds such as breaking glass, and other sensors to detect the opening of internal doors, the occurrence of flooding, the incidence of fire or smoke, etc.

In the hall 125, close to the front door 120, a disarm node 270 is mounted on a wall. The disarm node 270 has a user interface, including a touch screen or keypad to receive a user input to disarm the system, and a radio frequency transmitter, not shown, to transmit, in consequence of the user input, a disarm instruction to the control unit 140. A similar disarm node 280 is also mounted on a wall of the kitchen 210 near to the back door 220. Although the doors 250 also give access to the secured space, and are provided with door sensors to detect when they are opened, no corresponding disarm node is provided for them. This is because the sliding doors 250 are normally kept bolted on the inside, so that there is no expectation that an occupier or resident will ever enter the building through these doors when the security and monitoring system is armed. As such, any entry through those doors when the system is armed is likely to be an unauthorised entry. Similarly, it may be that the back door is always bolted on the inside when the house is left unoccupied, so that there is no expectation of a legitimate entrance through the back door when the security monitoring system is armed - in which case, the disarm node 280 for the back door may not be provided. Conversely, the owner may want to arm the system whenever she works in her back garden, which is accessed via the back door 220 - so that it is useful to provide a disarm node in the kitchen by the back door. Indeed, a gardening owner might find it very attractive to be able to disarm the system from the kitchen rather than having to walk to the central unit 140, as this would reduce the likelihood that mud from the garden would be walked through to the hall, for example.

The system is arranged so that it can be disarmed from the armed state by using the disarm node adjacent to or near the entrance through which the protected space was entered. Once a detector is triggered by a detected breach of an entrance, such as the opening of a door, it transmits an RF signal to the central unit, including an identifier for the detector, e.g. door sensor - so that the central unit can distinguish between signals received from detectors at different monitored entrances. In response to receiving an entrance breach message such as a door opening indication/message from a door sensor, the central unit starts an entry period timer - which sets a time window within which the system must be disarmed, failing which, the central unit will cause the security monitoring system to enter an alarm state. Entering an alarm state may involve the sounding of alarms and flashing lights in or at the premises. If the alarm installation is connected to a central monitoring station, the central unit will generally signal the alarm state to the Central Monitoring Station - which may lead to human intervention, video scanning, audio monitoring, etc.

In order to disarm the system, typically a code may need to be entered into the system, either at the control unit, or at a disarm node. If there is more than one disarm node, the control unit may use knowledge of the proximity of particular disarm nodes and particular entrance breach detectors (e.g. door sensors) to permit disarm only from the disarm node adjacent the entrance breach detector (e.g. PIR or magnetic contact device) that transmitted the entrance breach signal. The disarm nodes may include a physical keypad or a touch screen to enable a user to enter an appropriate disarm code, and may include visual indicators and/or a display panel to indicate progress and current system status. This approach to disarming an armed system requires manual intervention with the disarm node. The disarm nodes may also each include a near field communication (NFC) antenna and transceiver for communication with an NFC-enabled device, such as a portable authentication device in the form of a fob, a mobile phone, a watch, etc. to enable the system to be armed and disarmed by bringing the NFC-enabled device within a few centimetres of the disarm node. But again, in order to be able to disarm the system with such an NFC-enabled device, a user must have a hand free to bring the NFC-enabled device into nearcontact with the disarm node.

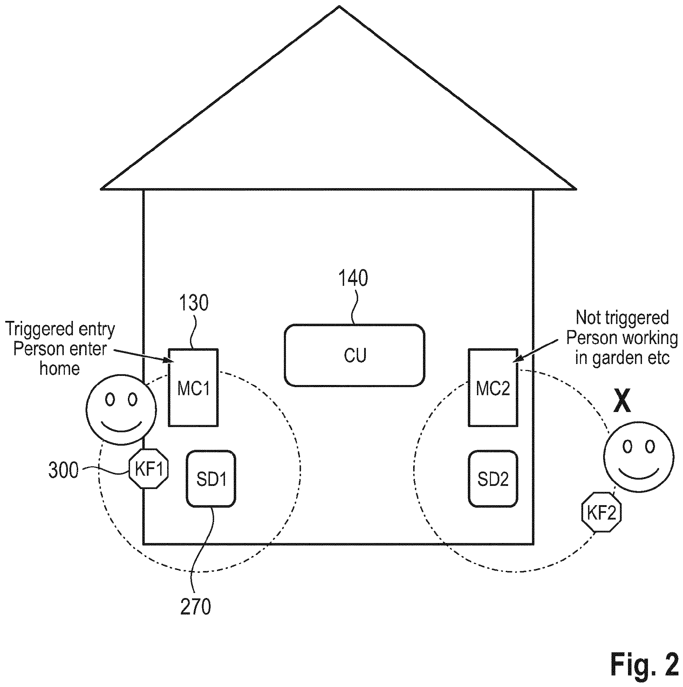

In order to permit hands-free disarming, the system is further provided with one or more portable authentication devices such as keytags or key fobs. The or each portable authentication device has a portable authentication device identity that is registered with the control unit, and a transceiver to receive signals from a disarm node and to transmit signals to the control unit. Each portable authentication device may optionally be an NFC-enabled device, as just described. Each portable authentication device also includes a motion sensor configured to sense motion of the portable authentication device and to provide an output to the processor based on sensed motion of the portable authentication device. The processor is configured to determine whether the portable authentication device is stationary or in motion, based on the output of the motion sensor. Conveniently, the motion sensor may be an accelerometer. Preferably, the accelerometer is a multi-axis, e.g. 3-axis, accelerometer. The operation of the system using one or more such portable authentication devices will now be described with reference to Figures 2, 3 and 4.

Figure 2 shows a stylised building in which a security monitoring system according to an embodiment of the invention is installed. The installation includes a central unit 140, and a door 50 giving access to the building has a door sensor 130 to detect the opening of the door (more generally, the breaching of an entrance). Adjacent the door and inside the secured space is a disarm node 270. The disarm node is preferably secured to the structure of the building so that its location with respect to the entrance 50 is fixed and the association between the particular entrance breach detector and the disarm node. The property's owner/resident 66 has a key fob 300 which can be used to enable hands-free disarming of the monitoring system. The key fob has an identity that has been registered with the central unit, and there may be more than one such fob, each with a unique identifier which is registered with the central unit and stored in its memory.

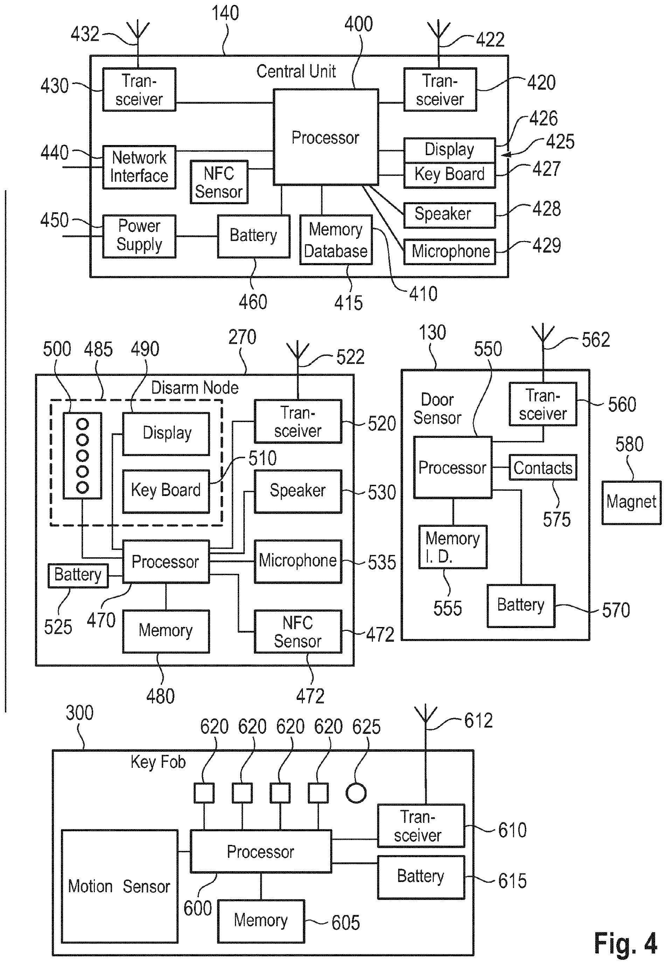

Figure 4 shows the main components of the various devices that take part in the hands-free disarming process. The control unit 140 includes a processor 400 with an associated memory 410 which stores, among other things, identities for the key fobs that are registered to the system, identities for the detectors (e.g. PIRs and/or magnetic contact devices) and disarm nodes of the system together with an association between each disarm node and the detector for the entrance closest to the relevant disarm node. These identities and associations are stored in a database 415 within the memory 410. The central unit includes at least one RF transceiver 420, with associated antenna 422, for communication with the various nodes and sensors of the monitoring system. Typically, there will be a second transceiver 430 as shown , also with an associated antenna 432, for communication with the central monitoring station 150, as a backup or alternative to a wired data connection to the Internet via a network interface 440. The antennas of the various transceivers will typically all be internal to the central unit. The processor 400 is connected to, and controls, the memory 410, transceivers 420, 430 and the network interface 440. The central unit generally draws power from the domestic power supply ( generally referred to as a mains power supply) which feeds a power supply 450 within or associated with the central unit. The central unit also includes a backup autonomous power supply, such as a battery power supply, which automatically becomes operational in the event that the external power supply fails. The internal autonomous power supply is based on rechargeable cells 460 that are kept continuously topped up by the power supply 450. The central unit may also include a user interface 425, including a display 426, a keypad or keyboard 427, a loudspeaker 428, and a microphone 429. The keypad or keyboard may be a provided by making the display a touch-sensitive display, or as a unit distinct from the display. The central unit may be arranged to accept through the keypad or keyboard a code or codes to arm and disarm the system. The central unit may also include a near field communication (NFC) antenna and a corresponding NFC chip or equivalent circuitry which can be used, for example, to detect the presence of a "disarm dongle" provided to the user of the system and which is capable of communicating with the central unit using Near Field Communication. The key fobs may also be provided with an NFC antenna and chip or equivalent circuitry, so that they can be used as "disarm dongles" with the central unit and with NFC-enabled disarm nodes.

The disarm node 270 includes a processor 470 with an associated memory 480 that stores an ID of the disarm node. The disarm node also includes a user interface 485 comprising a keyboard or number pad, 510, indicators, e.g. LEDs, 500, and optionally a display 490. If a display is provided, it may be used to provide the keyboard or number pad functionality through the use of a touch screen display as display 490. A transceiver 520, with an associated antenna 522 (which will typically be internal, rather than external as illustrated), is controlled by the processor 470, and is used for communicating with the central unit 140 and the key fob 300. The disarm node includes an autonomous power supply, e.g. battery power supply, 525, and in general this will be the only power supply as typically it is preferred not to have to connect disarm nodes to the mains power supply. A loudspeaker 530 may be provided so that audible messages and instructions can be given to a user at the disarm node. These audible messages an instructions may be automated ones, generated by the central unit all by the disarm node itself, but additionally the loudspeaker 530 can be used to relay messages from a central monitoring station 150. For example, the loudspeaker may be used to provide a disarm success or failure message, and to provide a prompt for the user to enter credentials (e.g. passcode) in the event that hands free disarm has failed. Conveniently, the disarm node may also include a microphone 535 to permit a user at the disarm node to hold a conversation with a human operative in, for example, a central monitoring station 150, or even with the emergency services - for example if patched through by the central monitoring station. Preferably, the disarm node 270 is secured to the building or other fixed property protected by the security monitoring system, for example attached to an internal wall at a height convenient for user operation - for example fixed at a height between 1 metre and 1.5 metres from the floor.

The system may be so arranged that a disarm node can only be used for disarming the system from an armed state, or may be arranged to permit the system to be armed (e.g.to either a part-armed or fully-armed state) and disarmed from a disarm node. Like the central unit, the disarm node may also include a Near Field Communication antenna and chip 472 to enable a disarm dongle, such as an NFC-enabled fob, to be used to disarm the system by bringing the dongle within a few centimetres of the disarm node.

The disarm node is preferably configured to encrypt its radio transmissions, and to decrypt received signals, so that secure communications with the control unit 140 are possible. The encryption may be based on a secret shared between the control unit 140 and the disarm node 270.

The detector to detect the breaching of the entrance is here illustrated as a door sensor 130 to detect the opening of a door. This door sensor includes a processor 550, with an associated memory 555 which stores an identifier for the door sensor, a transceiver 560, with an associated internal antenna 562, connected to, and controlled by the processor 550, all powered by an autonomous, e.g. battery, power supply 570. As with the disarm node, typically the autonomous power supply 570 will be the only power supply for the door sensor. The door sensor includes in addition a switch, for example a pair of contacts, 575, that are controlled by the opening and closing of the door with which the door sensor is associated. Typically, the contacts 575 respond to the presence of a magnetic field provided by a magnet 580. The magnet is typically attached to the leaf of the door, while the contacts are typically secured to the frame of the door. The contacts 575 may be closed in the presence of the magnetic field, opening when the contacts and the magnet are moved apart as the door opens, or they may be open in the presence of the magnetic field, closing when the field is taken away as the door is opened. Alternatives, such as Hall effect sensors, or an optical sensing arrangement, can be used in place of magnetically controlled contacts. But, because the door sensor is battery powered, the sensor arrangement is preferably one that consumes no or very little power in the resting (door closed) state - which makes the use of magnetically controlled contacts attractive.

The portable authentication device 300 includes a processor 600, with an associated memory 605 that stores an identifier for the portable authentication device, a transceiver 610, and a battery 615 that provides power to the processor and the transceiver. Transceiver 610, which has an associated antenna 612, may be a wake on radio transceiver. The use of a wake on radio transceiver typically enables a reduction in the amount of power consumed by the portable authentication device, thereby further extending the life of the battery of the portable authentication device. Alternatively, the transceiver may be a conventional polling transceiver designed for low power consumption. Such a polling transceiver, when in a resting state, periodically powers just the front end of its receiver circuit to listen (poll) for beacon signals. If a beacon signal is detected, possibly subject to some power level minimum, the rest of the receiver circuit is energised to receive transmissions. Such a polling transceiver may listen for no more than about 10 ms, e.g. for 2 ms unless a beacon signal is detected. The frequency with which the transceiver carries out polling is a compromise between battery life and responsiveness. A period between poling events of 1 to 2 seconds will typically give satisfactory responsiveness with acceptable battery life. Typically the system will be configured to enable the poling period to be set, and changed, via an RF configuration command from the central unit.

The transceiver, of whatever kind, is controlled by the processor and enables radio communication with the central unit 140 and the disarm node 270. The portable authentication device includes a motion sensor 650, configured to sense motion of the portable authentication device and to provide an output to the processor 600, to which it is operatively connected, based on sensed motion of the portable authentication device. The processor is configured to determine whether the portable authentication device is stationary or in motion, based on the output of the motion sensor. The motion sensor is typically an accelerometer, for example a 2 or 3-axis accelerometer, although other kinds of motion sensor may be used. Typically the motion sensor will have intelligent motion-based power management so that power consumption is minimised in the event that motion is not detected for a certain period of time.

When the motion detector detects no motion, the processor may be configured to generate a running count of the time since the portable authentication device was last in motion. The portable authentication device may be configured to shut down the portable authentication device's transceiver in the event that the portable authentication device is deemed to be stationary. The transceiver may then only be re-energised in the event that motion is once again detected.

The portable authentication device may be deemed to be stationary if the motion sensor senses no motion at the time the instruction is received. Alternatively, the portable authentication device may be deemed to be stationary if the motion sensor has sensed no motion of the portable authentication device during a predetermined period preceding the time when the instruction is received.

The portable authentication device may also include one or more buttons 620 which a user can use to issue commands or responses. The portable authentication device may also include one or more visual indicators 625, for example one or more LEDs, to indicate a status, to confirm a button press, or the like. For example, a single multi-coloured indicator, such as an LED, may be used to provide multiple different indications while keeping component count low and enabling the fob dimensions to be made compact. The portable authentication device is preferably configured to encrypt its radio transmissions, and to decrypt received signals, so that secure communications with the central unit are possible. The encryption may for example be based on a secret shared between the central unit and the portable authentication device.

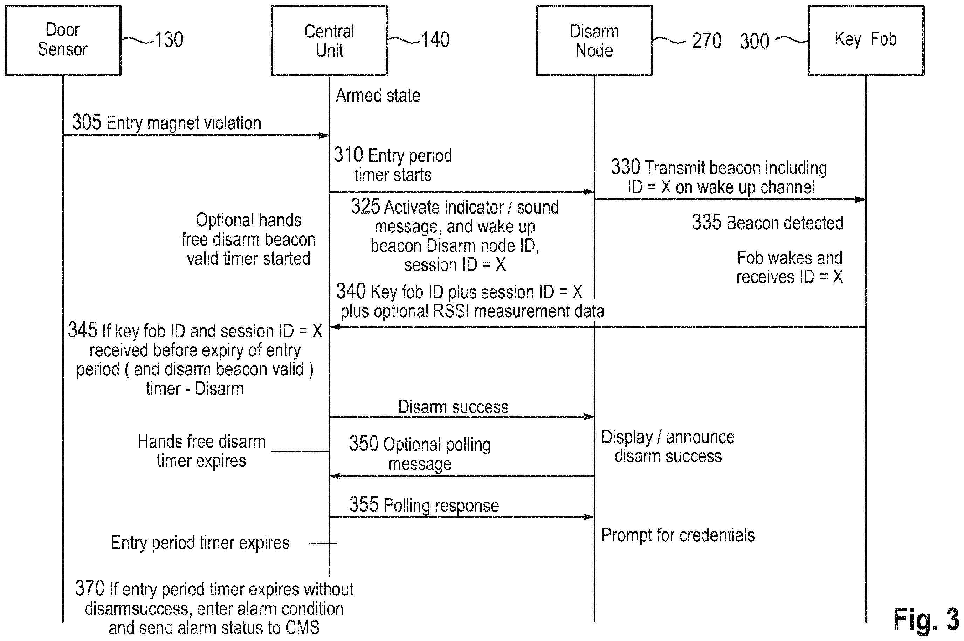

Figure 3 is a timing diagram showing the sequence of events and actions of the various elements of the security system that characterise a method, according to an embodiment of the invention, of controlling a security monitoring system to achieve hands-free disarming of the system. The diagram concerns the operations of the entrance breach detector - e.g. the door sensor 130, the central unit 140, the disarm node 270, and the portable authentication device 300.

The method start at 305 with the detector sensing an event, for example the opening of the door whose status it senses, and responding to this by using its RF transceiver to transmit an entry violation message. This entry violation message, which includes the detector's ID, is received at a transceiver of the control unit 140. In this example it is assumed that the detector is a magnetic contact device, but the method is the same or essentially the same if the entrance breach is detected using a motion sensor such as a PIR device or video camera.

The central unit starts, at 310, an entry period timer, which is set for the duration of the period within which the disarm process needs to be completed before the control unit causes the system to enter an alarm condition - for example in the range 20 to 40 seconds. The central unit identifies the detector that transmitted the entry violation message from the detector ID contained in the received message, and retrieves from the database 415 the ID of the disarm node that is associated with the identified door sensor. If no disarm node is associated with the identified door sensor, the central unit waits for the input of a disarm code at the user interface 425 or for the arrival of a message from another disarm node (e.g. a message to the effect that the disarm passcode has been entered at that disarm node) if that is permitted by the set-up of the system. But, if the database reveals that the door sensor (entrance breach detector) is associated with a disarm node, the central unit includes the ID code for that disarm node in a message which it transmits, at 315, to the disarm node 270 to cause the disarm node to activate, at 320, an indicator, an LED 500 for example, or to make a sound through loudspeaker 530, to indicate to the person entering the secured space that the system is armed and that action must be taken to disarm the system within the period set for the entry period timer. The message also causes the disarm node to transmit, at 330, a beacon signal or polling signal to wake up the transceiver in any portable authentication device (or at least any portable authentication device which is moving or which has not had its transceiver shut down following a period of non-movement) within the vicinity of the targeted disarm node, and preferably includes a special identifier to be included in the beacon signal or polling signal, and details of the packet countdown to be used. The special identifier will typically be a random or pseudo random number whose value changes at each use. The portable authentication device listens for beacon signals on one or more channels whose parameters are known to each of the portable authentication devices - for example by having been pre-programmed, but more preferably having been communicated to the or each portable authentication device when that portable authentication device first registered with the central unit (although of course the central unit could periodically update these parameters through an exchange of messages with the portable authentication device(s)). At this time, the control unit 140 preferably also starts, at 325, a hands-free disarm beacon valid timer, which determines the time within which reception by the central unit of a message from a portable authentication device (e.g. keyfob) that includes the special identifier (if used) will be effective to disarm the system. The hands-free disarm beacon valid timer setting is also included in the message sent to the disarm node. The characteristics of the beacon or polling signal transmitted by the disarm node are preferably chosen to make the effective range of the beacon signal small - preferably of the order of a few metres, e.g. no more than 5 metres for detection by a portable authentication device, so that it will only be effective in waking a portable authentication device in the immediate vicinity of the disarm node. These characteristics will be discussed in more detail later.

The transceiver 610 of a portable authentication device 300 that is within a few metres of the disarm node (and that is not currently in a shut-down state following a period of non-movement) receives the beacon signal and wakes up. The transceiver 610 receives and decodes the beacon signal, retrieving the special identifier (if used). The controller of the portable authentication device then causes the transceiver 610 of the portable authentication device to transmit, at 340, a message including the portable authentication device ID and the special identifier (if used)to the central unit 140.

The central unit checks that the special identifier (if used) is valid (meaning that it is one issued within the current period of the hands-free disarm beacon valid timer) and also checks to see whether the portable authentication device ID corresponds to one registered with the central unit. If both of these checks are passed (if a special identifier is being used), the central unit at 345, will disarm the system if the message from the portable authentication device, containing the portable authentication device id and the special identifier (if used), was received before expiry of the hands-free disarm beacon valid timer. The control unit may also at this stage send a further message to the disarm node to cause the disarm node to provide a notification of the fact that the system has been disarmed - for example, the disarm node may activate an appropriate indicator light 500 and/or provide a "disarm success" sound or announcement through the loudspeaker 530. The central unit may also send a further message to the portable authentication device to cause the fob to generate a signal indicating successful disarming of the system - for example, by illuminating an indicator on the portable authentication device.

As will be described later, the disarm request message sent by the portable authentication device to the control unit may also include a report on the RSSI levels of messages received by the portable authentication device from the wake up node, and the control unit may use the information about measured RSSI levels in such a report in determining whether or not to trust the received disarm request - i.e. whether to disregard the disarm request as invalid on the basis that it is likely to have come from a rogue actor (outside the usual range of the disarm node) rather than from an authorised user within range of the disarm node.

If the hands-free disarm beacon valid timer expires without the control unit having received a message from a portable authentication device including a registered portable authentication device ID and the special identifier (if used), the central unit preferably transmits another message, at 360, to the disarm node (including the relevant disarm node identifier) to cause the disarm node to provide a visual or audible prompt, or both, indicating the need for the system to be disarmed in some other way - e.g. by entering appropriate credentials (such as a password or PIN) at the disarm node. The disarm node then provides this prompt, visually or audibly, or both, at 365. Any credentials entered at the disarm node are forwarded by the disarm node to the central unit. If appropriate credential are received by the central unit before expiry of the entry period timer, the system is disarmed.

It will be noted that the disarm credentials are not checked at the disarm node - with the disarm node sending a "success" message, if appropriate to the central unit, but rather that the entered credentials are transmitted from the disarm node to the central unit where they are checked.

The disarm node may be configured to send, at 350, if no disarm success/failure message has been received from the central unit, a polling message to the central unit after expiry of the hands-free disarm beacon valid timer period to check whether the disarm node should provide a disarm success indication. If the central unit receives such a polling message, it transmits a polling response to indicate success/failure and to cause the disarm node to provide a disarm success indication, or to indicate to failure - and the need to provide disarm credentials of some kind, as appropriate.

If no appropriate message is received from a portable authentication device within the hands-free disarm beacon valid timer and no appropriate disarm credentials are received before expiry of the entry period timer, the control unit identifies an alarm state. If the system is backed up by a central monitoring station (CMS), the central unit will send a status change message to the CMS, typically with the identifier of the entrance breach detector that first indicated an entrance breach, such as a door opening, event. The CMS may then cause the control unit to activate relevant video cameras or other image capture devices, audio capture devices, etc. and provide data feeds from these to the CMS. The CMS may also invoke human intervention as appropriate.

The system may be set up in such a way that, if the disarm node detects an input at its user interface 485, of if a near field communication (NFC) sensor 472 in the disarm node detects the presence of an appropriate NFC tag (disarm dongle), the transmission of the disarm beacon by the disarm node is halted or forestalled. In which cases the system is disarmed by the central unit if the appropriate disarm credentials are provided at the disarm node (or at the central unit) through a user interface or by means of a registered NFC tag (that is, a tag that has previously been registered with the central unit), before expiry of the entry period timer.

In an alternative embodiment, the central unit does not start a hands-free disarm timer, but instead the disarm node starts such a timer on receiving the message sent at step 315 by the central unit. If the disarm node does not receive a disarm success message from the central unit before expiry of the hands-free disarm timer, the disarm node provides an audible and/or visual warning to the effect that hands-free disarm has failed and that the system must be disarmed in some other way - e.g. by entering a PIN or passcode, or using a registered NFC tag, to avoid the system going to an alarm state. The hands-free disarm timer run by the disarm node has, of course, a duration short enough to ensure that it expires before the entry period timer that is run by the central unit. If the security management system can provide entry period timers of different lengths, then the central unit is set up to inform the or each disarm node of the duration of the entry period timer that has been set - and an allowance is made for the time taken for the central unit to process a door open message and for a disarm node to respond to the message sent at step 315, so that the length of the hands-free disarm timer can be adjusted appropriately to suit the length of entry period timer selected.

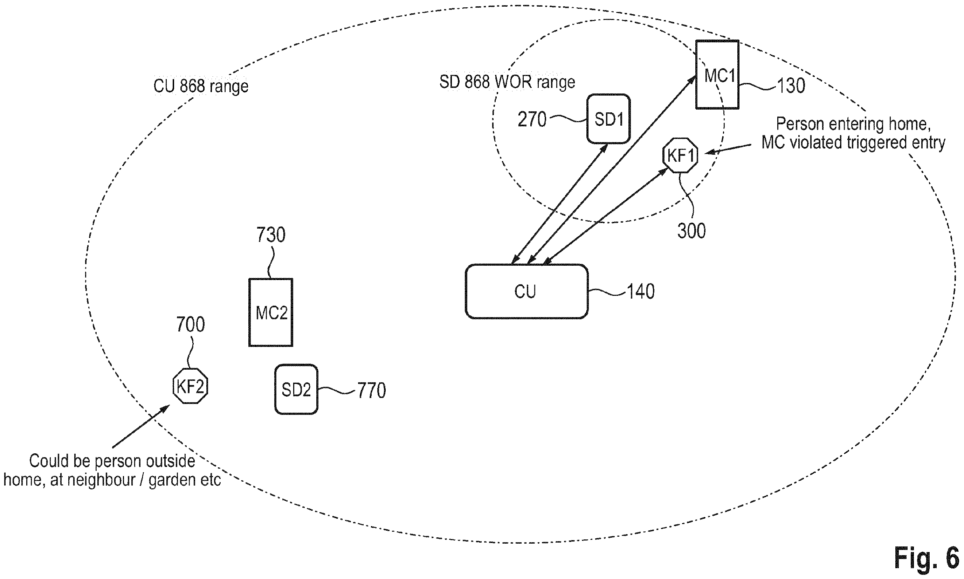

Preferably, RF communication between the central unit and the nodes, detectors and sensors of security monitoring systems according to embodiments of the invention use the industrial, scientific, and medical (ISM) radio bands, such as in Europe the 868MHz band. Within the 868 MHz band are several sub-bands dedicated to "non-specific SRD" which are of interest. For the beacon/polling signal that is used by the disarm node to activate nearby portable authentication device we are generally interested in engineering short range communication, as will shortly be explained with reference to Figure 6.

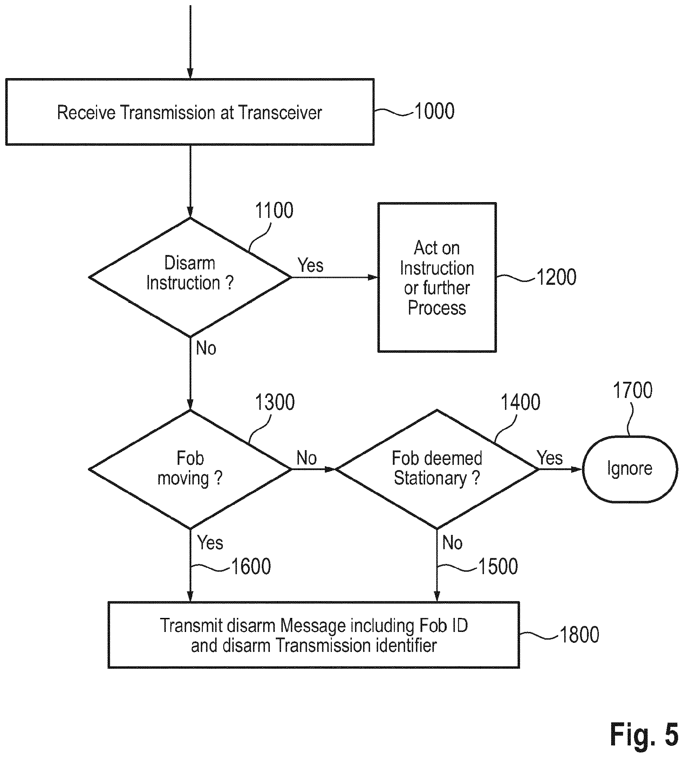

Figure 5 is a flow chart illustrating one possible process for a portable authentication device according to an embodiment of the invention to determine whether to respond to a received transmission. At 1000 the portable authentication device receives an RF transmission at its transceiver (the transceiver not having been shut down following a determination that the portable authentication device is stationary). As a first step, 1100, the portable authentication device determines whether or not the received transmission is a disarm instruction - that is, including a disarm transmission identifier of some kind, for example being a wake beacon or disarm success or failure message. If the determination is negative, that is to say it is not a disarm instruction, the process moves to step 1200.

If the determination is positive, the process proceeds to step 1300 in which the movement status of the portable authentication device is checked. If the portable authentication device is determined to be stationary, the process moves to step 1400. If the portable authentication device is configured to shut down its transceiver following a period of non-movement, when the fob is deemed to be stationary, the portable authentication device will subsequently not receive any RF transmission (until after the portable authentication device is detected as having moved again) and hence this process does not take place. But if the portable authentication device is determined to be moving, at 1600, the process proceeds to step 1800.

At step 1400, the processor determines whether the portable authentication device should be deemed to be stationary, for example by checking a count (or some other measure of elapsed time) since the portable authentication device was last determined to be moving. If the count is less than a predetermined threshold count, the portable authentication device is determined, 1500, to be a "live" portable authentication device which can be used to provide a disarm instruction to the central unit (that is, the portable authentication device is not deemed to be stationary), and the process proceeds to step 1800. If the portable authentication device is deemed to be stationary, then no disarm message will be transmitted by the portable authentication device, and the process ends at 1700 The period of inactivity that is accepted as indicating that a portable authentication device is "live" may be set differently in different installations, but typically this period will be no more than about 60 seconds. A cut off at 30 seconds will often be long enough for most users, although for system installations where the occupants or users of the secured space are elderly or infirm 30 seconds may not be long enough. Preferably the cut off period is kept relatively short, at no more than a minute or so.

If at step 1300 the portable authentication device is determined to be moving 1600, the process proceeds to step 1800.

At step 1800, the portable authentication device generates a transmission message that includes the portable authentication device ID, and the disarm transmission identifier (if used), and such other parameters as the system requires (for example, a report of measured RSSI).

At step 1200, when the transmission is determined not to be a disarm instruction, the portable authentication device may be programmed simply to read the transmission and act on the contents, or to check for a certain flag or flags and to respond differently based on the flag(s) determined to be present. So, for example, the monitoring system may be so arranged that the portable authentication device is configured to receive an instruction other than a disarm instruction via the transceiver, including a flag, from the control unit to perform an action; and wherein in the event that the other instruction includes the flag, the processor is configured to cause the portable authentication device to perform the instructed action whether or not, when the instruction is received, the portable authentication device is determined to be stationary. Portable authentication devices configured in this way can be activated by an RF signal, from the control unit or from a disarm node, enabling the status of all portable authentication devices in range to be checked and/or updated. It would also be possible to perform an audit of all the portable authentication devices in range of, say, the central unit. If such a portable authentication device were to include one or more of a visual indicator, an audio transducer, a haptic transducer, and were further configured to generate an output using one or more of these when so instructed by a received instruction including the flag, a mislaid portable authentication device could be made to announce itself. Of course this approach would only work with all portable authentication devices if they were either not configured to shut down their transceivers following a period of non-movement, or if none of them had shut down their transceiver when the RF signal from the control unit or disarm node was transmitted.

Portable authentication devices according to the invention may be configured to listen for instructions related to hands free disarm only on a particular channel or channels, with given frequency and given modulation, but to listen to another channel or channels on a different frequency and possibly with different modulation for other kinds of instructions.

Disarm instructions received from a disarm node do not typically contain a portable authentication device ID - because, if more than one portable authentication device is registered with the central unit, it cannot be assumed which if any portable authentication device is being carried by the person who opened the door whose opening has been sensed. But other message may be targeted to a particular portable authentication device or to a group of portable authentication devices that is a subset of all the registered portable authentication devices. Consequently, a portable authentication device according to embodiments of the invention may also be arranged to check the contents of received messages for the presence of that portable authentication device's ID. In this way, the control unit can target an individual portable authentication device or group of portable authentication devices. For example, in the event that a portable authentication device has been mislaid, a "announce myself" message could be transmitted by the central unit flagged with the ID of the particular portable authentication device that has been mislaid. If other portable authentication devices receive the message, they do not respond to it , because it is flagged as an "announce myself" message and does not contain their ID. Whereas the missing portable authentication device sees that the message is flagged as an "announce myself" message, recognises its own ID, and announces its presence using one or more of its inbuilt indicators (for example one or more LEDs, or providing a haptic announcement - by "buzzing" or vibrating).

In general, monitoring systems according to embodiments of the invention will not be configured to transmit only disarm messages to portable authentication devices, but will also be configured to send other types of messages to portable authentication devices. In systems that do only send portable authentication devices disarm messages, a portable authentication device just needs to recognise a received message as a disarm message and respond with the disarm transmission identifier (if used) and the portable authentication device ID (although, as will be explained later, portable authentication devices may be required to perform RSSI measurements and include these, or a report based on these, as part of the response). But in systems where there are additional message types, message types will typically fall into two classes: targeted messages that are targeted at a subset of one or more of all the registered portable authentication devices, that include one or more portable authentication device IDs, and in respect of which a reaction is sought only from the portable authentication device(s) having an ID included in the message; and group or general messages, in respect of which a reaction is sought from any portable authentication device that receives the message - and which therefore do not need to include a portable authentication device ID (and which hence will generally not include any portable authentication device ID). For example, a central unit may be configured to instruct the portable authentication device involved in a hands free disarm event to provide a disarm success indicator on a successful disarm event. Such an instruction will preferably include the ID of the portable authentication device that transmitted the disarm request to the central unit (the portable authentication device ID having been included in that disarm request).

Messages may be sent to portable authentication devices at least from the control unit (of which, in some systems, there may be more than one) and disarm nodes. Where there are multiple message types, they may be labelled Disarm Message, Group, and Targeted - labels which can be considered to be class flags. If finer granularity is required, a further level of flags may be provided - so that a message type is indicated by a primary flag (Disarm Message, Group, or Targeted), and (at least for Group and Targeted) a secondary flag that indicates the specific message type within the class. Alternatively, a single level of flags may be provided, with typically multiple flags for each of the Group and Targeted classes.

Figure 6 is a schematic diagram illustrating why we generally want the range of the beacon signals from disarm nodes to have shorter range than transmissions from the central unit of a monitoring system. A first person entering a secured space opens a door, for example the front door that gives access to a street, which is monitored by door sensor 130 or other detector. The person is carrying a portable authentication device (e.g. keyfob) 300 which is registered with the control unit of the monitoring system. Adjacent the door that is opened is a disarm node 270. The system's central unit 140 includes a database 415 that stores an association between an identifier for the door sensor 130, or other detector, and an identifier for the disarm node 270. The secured space can also be accessed by another door of the building, for example a back door that gives access to a back garden of the building, and that door is fitted with another door sensor 730, or other detector. Also near the back door, within the secured space, is another disarm node 770. A second portable authentication device, 700, is carried by another person who is also an occupier of the secured space, who is working in the back garden.

When the first person opens the front door, and the central unit causes the first disarm node to transmit a beacon signal, it is desirable that the beacon signal is received by the first key fob 300 which is adjacent (say within a metre or two at most) of the first disarm node 270, so that the first key fob wakes up, but that the second portable authentication device 700, that is carried by the second person who is working in the back garden, does not receive that beacon signal and therefore does not wake up. Of course in the scenario just described, the person opening the front door and the person carrying the second portable authentication device are both "legitimate" occupiers of the secured premises, so that there would be no problem inherently in sending a disarm signal from the second portable authentication device in respect of an entrance made by the first person (such as might happen if the first person had forgotten to carry their key fob) - as could happen if the effective range of the beacon signal from the first disarm node 270 were received and acted upon by the second portable authentication device 700. But of course, it would be a different situation if the person opening the front door were a villain who was entering the premises unlawfully through the front door. In this case, even if the villain didn't have a registered key fob, their entry would still result in the system being disarmed if the effective range of the beacon signal from the first disarm node was such as to cause the second portable authentication device to send a disarm signal to the control unit. For this reason we generally want the effective range of beacon signals from disarm nodes to be restricted to the immediate vicinity of the disarm node and including the space between the disarm node and the door with which it is associated.

These scenarios also illustrate why we want the control unit to target beaconing messages just to the disarm node that is associated with the entrance breach detector (e.g. door sensor) that has detected and reported an entrance breach. We want the beaconing messages to be detectable by all of the disarm nodes, wherever they are located. So if the beaconing messages were generic, they would possible cause all disarm nodes to transmit beaconing signals, the second portable authentication device of the person working in the back garden might be triggered by beaconing signals from the second disarm node, when a villain without a portable authentication device was effecting illicit entrance through the front door - even if the beaconing signals from the disarm nodes were all very short range.

Within the 868/869 MHz band in Europe, the sub-band between 869.7 and 870Mhz is particularly interesting for use when transmitting short-range beaconing signals from the disarm nodes because it provides a relatively wide channel, the beacon channel, which allows the use of a high data rate, e.g. 250 kbit/s, which is helpful in reducing the effective range of the beacon signal. The effective radiated power ceiling of 5mW also poses no significant constraint for this application. For these reasons, this sub-band between 869.7 and 870Mhz is the preferred frequency band for the short-range transmissions from the disarm node - and which are used for communication with portable authentication devices, e.g. for the transmission of wake up messages.

Although, for the reasons just given, we prefer to transmit the beacons from the disarm node closest to the entrance which gave rise to the alarm trigger signal, alternatives are possible.

For example, a sensor that detects the breaching of an entrance transmits an alarm trigger signal, including a sensor identifier, that is detected by the control unit. The control unit recognises the sensor identifier and uses this to retrieve the identifier for the disarm node that is associated with the relevant sensor. The control unit then transmits a message, which may be a wake up message, including the relevant disarm node identifier which has the effect of causing the relevant disarm node to listen for signals from fobs (portable identification devices). The control unit then transmits a fob wake up signal receivable by any fob adjacent any of the disarm nodes. Any fob that receives the fob wake up signal from the control unit then responds by transmitting a response signal, including its own identifier, that is only detectable by a disarm node within no more than about 2 metres of the fob (using appropriately selected transmission characteristics of power, data rate, etc. to ensure a short effective transmission range). A disarm node receiving the fob response signal then transmits a signal, including the fob identifier, to the control unit which then determines whether the fob identifier is for a registered fob. In this way only the disarm node whose identifier was included in the transmission from the control unit detects the fob response.

As a further alternative, the disarm node may be configured to generate an alarm trigger signal that is transmitted to the control unit in response to receiving an entrance breach signal from a sensor configured to detect the breaching of an entrance to the building or secured space. That is, the sensor transmits a signal in respect of a detected breach, which signal is received by the associated disarm node rather than by the control unit. The control unit then transmits a fob wake up signal receivable by any fob adjacent any of the disarm nodes. Any fob that receives the fob wake up signal from the control unit then responds by transmitting a response signal, including its own identifier, that is only detectable by a disarm node within no more than about 2 metres of the fob. A disarm node receiving the fob response signal then transmits a signal, including the fob identifier, to the control unit which then determines whether the fob identifier is for a registered fob. In this way only the disarm node whose identifier was included in the transmission from the control unit detects the fob response. However, this approach is less preferred than the alternatives already mentioned, because if the signal from the sensor detecting the breach of an entrance is only received by the control unit through the disarm node, rather than directly, the security of the system is reduced - the disarm node becomes a point of weakness, because if it is disabled or its signals blocked in some way by a bad actor, the control unit will not receive any alarm trigger signal in respect of the breach. For this reason, it would be desirable to include anti-tampering features in the disarm node, such as sensors to detect and report on attempts to open the disarm node, and possible also implementing a "heartbeat" function in which the disarm node periodically "checks-in" with the control unit - the failure of the control unit to receive the heartbeat, or the reception of a tamper message from the disarm node causing the control unit to determine an alarm condition which is reported to the central monitoring station (if present) and to provide alarm signals (audio and optical) through the alarm installation - as well as sending reports to the user's phone - email, as appropriate. Such extra security features may also be present in disarm nodes according to any of the other embodiments and variants.

Achieving effective battery life of nodes and sensors in alarm and monitoring systems is a constant concern, because battery failure disables the relevant node or sensor, which can lead to loss of security, and battery replacement may involve a site visit by the system supplier - which is expensive and inconvenient. For a portable authentication device, loss of battery power means that the portable authentication device stops working, which is inconvenient for the user, and the cause of the failure may not be apparent to the user so that the user may require a site visit to identify and fix the problem. Consequently, we are interested in reducing power consumption in all of the battery powered components of the system, including the portable authentication device. For this reason the use of a wake on radio receiver in the portable authentication device is attractive although acceptable battery life can also be obtained using a more conventional radio receiver that periodically wakes to listen (poll) for beacon signals.

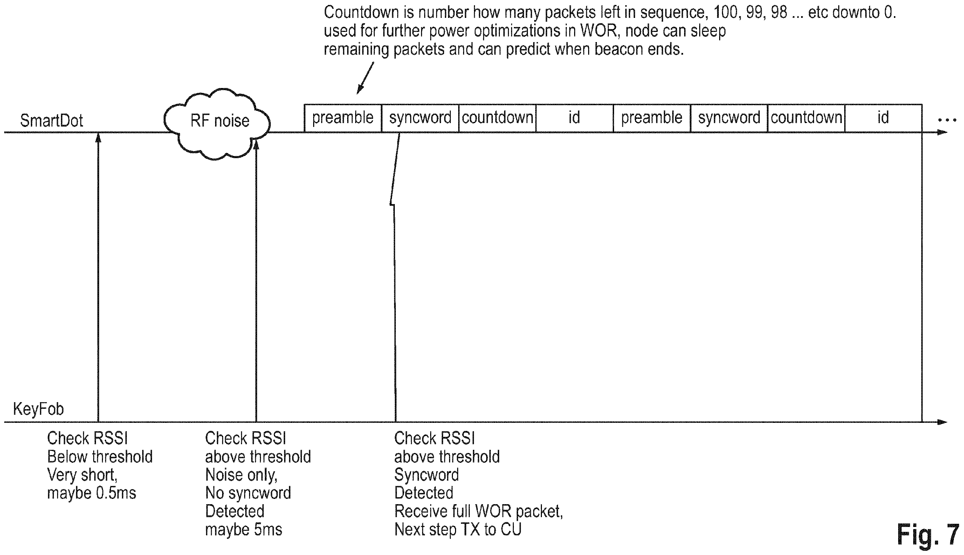

One way of reducing portable authentication device power consumption during the wake up process is for the portable authentication device to use 2-stage detection, an example of which is illustrated in Figure 7. A first detection stage of the transceiver of the portable authentication device may be used to perform a first step which involves just checking an RSSI level. For example, the transceiver in the portable authentication device may perform periodically a brief RSSI check polling the beacon channel, using just the RF front end of the transceiver, for example for a first period of less than a few milliseconds, preferably a fraction of a millisecond, e.g. around 0.5 milliseconds, and then revert to its rest state if the sensed RSSI level is below some pre-set threshold. If the sensed RSSI level is above threshold, the portable authentication device listens for a brief period for a synch word from the disarm node - for example for a second period of a few milliseconds , for example for less than 10 milliseconds, e.g. 5ms. If no synch word is detected, the transceiver reverts to its rest state. But if a synch word is detected, the transceiver starts the full radio receiver which remains powered up, for example for a third period of between say 8 to 16ms, for example 10ms, to receive the full wake up packet. Each packet will typically last of the order of 220µs, and the disarm node may transmit for 2 to 4 seconds, e.g. for 3 seconds - meaning that the portable authentication device should be able to receive 20 to 30 packets. Clearly, the choice of duration for the various periods is a trade-off between power consumption, user experience and accuracy - but the timings given represent a reasonable compromise as a starting point to be adjusted as necessary.

RSSI detection can be achieved by activating just front end components of the transceiver, avoiding the need to power up all of the transceiver. If the detected RSSI level is below a threshold, the portable authentication device determines that there is unlikely to be valid data available and halts its RSSI check until the next cycle. The cycle period determines the length of time for which the disarm node needs to transmit its beacon and also sets a lower bound on how quickly hands-free disarm is likely to occur on average. The portable authentication device wake up interval, which is controlled by a clock in the portable authentication device, will typically be chosen based on the duration of the disarm node beacon. For example, if the disarm node transmits its beacon for 2 seconds, then a portable authentication device wake up interval of one second would provide a good likelihood that a f portable authentication device within range of a broadcasting disarm node would be able to wake and retrieve the necessary information from the beacon signal. A portable authentication device wake up of interval (period between polling events) of 2 seconds will often be frequent enough when the disarm node is configured to transmit its beacon signal for 3 seconds. The portable authentication device wake up interval can conveniently be set at between a quarter and two thirds of the beacon duration. By having the portable authentication device check the RSSI for a very brief period, for example a few milliseconds, at each polling event, good battery life can generally be obtained. A shorter relative cycle time is not technically problematic, but it is likely to use proportionally more battery power and hence shorten battery life commensurately. The cycle time could be more than one half of the beacon duration, provided the system enables the portable authentication device to capture the beacon quickly after wake up, so that the necessary special ID (if used) can be recovered by the portable authentication device.

The disarm node transmits a beacon signal, on the beacon channel, which preferably includes the special codeword (shown as ID in Figure 7) received from the control unit for this hands free disarm event. Typically, the beacon signal will be made up of a sequence of packets, each beginning with a preamble, followed by a synch word, then an identifier which is the special ID from the central unit. Preferably, each packet includes a countdown value, the countdown value decreasing by one in each subsequent packet (to zero in the final packet of the sequence) and indicating the number of packets until the end of the sequence of packets.

The beacon signal is recognised as such by the portable authentication device, because it is the only message of that kind with the relevant format in that channel, causing the portable authentication device to transmit a response including the special codeword (special i.d.).

By including sequence information in the beacon from the disarm node, it becomes possible for the portable authentication device to determine when the beacon transmission will end. Using this information, the portable authentication device can delay transmitting its response to the central unit until after the disarm node has finished transmitting - so that it is easier for the central unit to detect the response from the portable authentication device without local interference. This means that portable authentication device transmit power can be kept low, prolonging the life of the portable authentication device's battery, while still enabling the control unit to receive the portable authentication device 's response. In addition, when the portable authentication device captures beacon packets, it can calculate how long it will be before the sequence ends. If the captured packets are early in the sequence, the portable authentication device can "snooze" or power down while waiting for the sequence to end, and then wake again in order to transmit its response to the central unit just after the sequence ends.

The portable authentication device will listen to multiple packets to be able to use statistics to get a reliable RSSI figure, and may report on the RSSI figure for each of the packets detected.

As a refinement, the portable authentication device controller may use movement information from the portable authentication device's built-in movement sensor to control the polling by the portable authentication device's transceiver. That is, polling may be suspended in the event that the processor deems that the portable authentication device is stationary - e.g. if movement sensor detects no movement, and the processor determines that a count since the portable authentication device was last determined to be moving is more than a predetermined threshold count, the portable authentication device is deemed to be stationary and polling may be suspended completely or the frequency of polling reduced (the preferred option, since that means that "lost" portable authentication devices can be made to announce themselves when they next poll). For example, the frequency of polling may be reduced to between a half and a twentieth, or less, of the usual frequency. Conversely, if the processor determines that the portable authentication device is still moving, or has recently been moving (so that the portable authentication device is not deemed to be stationary), the usual polling frequency is maintained. The processor of the portable authentication device may be configured to cease generating the running count of the time since the portable authentication device was last in motion after the count of the time since the fob was last in motion reaches the predetermined threshold value, as this can reduce portable authentication device energy consumption, which is good for improving battery life.

In order to reduce the effective range of the radio beacon, it is transmitted from the disarm node at a low power (e.g. -20dBm or less) with a high data rate (for example, 250kbps or more, say 400 kbps) and with a low modulation index, to give an effective range of no more than about 5 metres. By using a suboptimal modulation index we achieve three things: quickly send a lot of packets, reduce sensitivity to decrease range and to fit inside the given spectrum. We limit the output power from the disarm node to limit range. To make it harder to receive from a greater distance we have a high data rate and low modulation index. However the main reason is not the poor link budget but the speed. The higher the bitrate the more packets can be used for estimation. Sensitivity is in the range of around -90dBm at this settings and we try to be in line of sight, meaning that the distance from the transmitter is given as the fading of the channel with distance, using Friis formula .

Encryption, for example based on shared keys, is preferably used for all transmissions from and to the control unit in each of the embodiments of the invention.

As mentioned previously, a further option to improve security, which may be used with any or all of the preceding options to further enhance the security of the system, is for the portable authentication device to include in the response message sent to the control unit details of the results of RSSI determinations made by the portable authentication device. In particular, the disarm node may be configured to send a series of wake up messages upon being prompted by the control unit to send a disarm instruction, preferably including a unique disarm transmission identifier, to the portable authentication device . And the portable authentication device may be configured to determine the RSSI level of each of the messages of the series that are received from the disarm node. The portable authentication device may be configured to include in the disarm request sent to the central unit a report based on the determined RSSI levels. For example, the portable authentication device may be configured to send a summary of the RSSI levels measured, such as the number of messages/packets measured or measured above a certain level, maximum RSSI level, average RSSI level, etc. Inclusion of the RSSI data can be used by the system to reduce the susceptibility of the system to "relay attacks" of the type used to fool passive entry systems (PES) of cars.

The portable authentication device would report RSSI values as, for example, max/min values, and an average, and the central unit may hold factory pre-set values for a "real" disarm, and/or these may be supplemented or replaced with real world values obtained during commissioning/testing of the system.

Instead of the identity of the portable authentication device being checked by the control unit, it would also be possible for the disarm node(s) to include a list of registered portable authentication devices and for the disarm node(s) rather than the control unit to perform the check of authentication device identity on receipt of the authentication devices response to the wake up signal/beacon. The disarm node would, on successful authentication transmit an alarm deactivation message to the control unit. Such an approach would of course require that the control unit update the disarm node(s) with additions and deletions to the list of registered authentication devices. This is a less preferred approach because of the need for the increased burden of keeping up to date lists in both the control unit and the disarm node(s).

Also, although as thus far described any disarm transmission identifier or event ID has been generated by the central unit and then transmitted to a disarm node for inclusion in a wake up message from the disarm node, other alternatives are of course possible. For example, the disarm node could itself generate a disarm transmission identifier or event ID and either provide this to the central unit for the central unit to check any received fob transmission for the presence of the correct disarm transmission identifier or event ID or itself check any received fob transmission for the presence of the correct disarm transmission identifier or event ID and transmit the result of the check to the central unit. In general it is preferable for the disarm transmission identifier or event ID to be generated and checked by the central unit, rather than devolving either or both of these functions to a disarm node, because this reduces the risk of a bad actor adopting the guise of a disarm node to fool the system.

In addition to being useable within the monitored space, a disarm node according to embodiments of the invention could usefully be disposed outside the monitored space or building as a means for a user to unlock a door that gives access to the monitored space of building and that has an electronically controlled lock, and to disarm the monitoring system. The provision of such an externally located disarm node could also permit a user to lock the electronically controlled lock of an access door with or without arming the system. For this use, a disarm node would preferably include a selector arrangement to enable a user to initiate an event. For example, the disarm node could include a selector to enable a user to unlock the electronically controlled lock of a door and disarming the monitoring system from an armed state, a selector for locking the lock of the door, and another selector for arming the system or for locking the lock of the door and arming the system. Such an electronically controlled lock would typically include an RF receiver, e.g. an RF transceiver, to receive control messages to lock and unlock the lock, and would typically also include means to decrypt encrypted messages received by the receiver. The selectors could be provided in the form of a keypad or as individual "buttons", preferably using capacitance sensing technology rather than as mechanical switches.

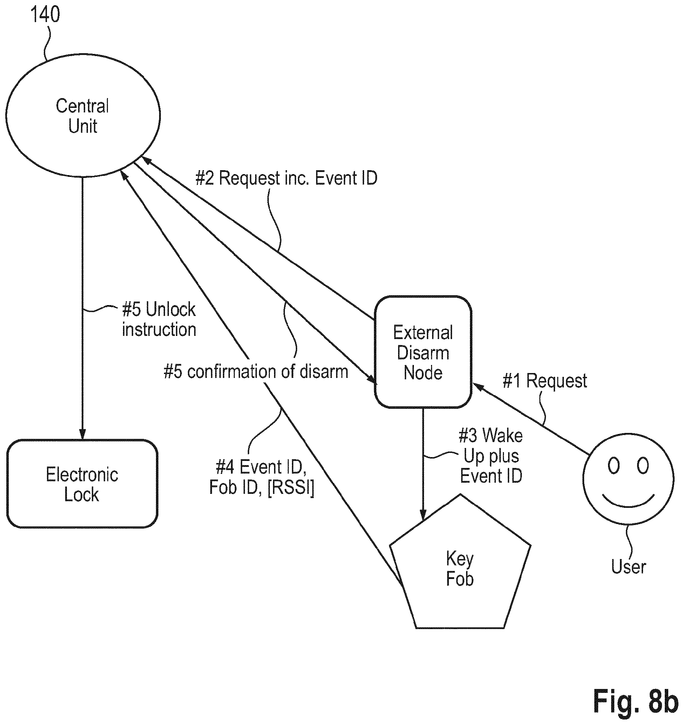

In use, according to a first embodiment, and as illustrated schematically in Figure 8b, such an externally located disarm node would react to operation of one of the selectors (event #1) by starting a "wake on radio" process (event #3) effectively to search for any user portable authentication device within range ( within 5 metres or less, e.g. within 1 or 2 metres) of the disarm node by transmitting wake up messages generally as previously described. The wake up message preferably includes a unique event ID (e.g. a random number) which serves the same security-enhancing function as the unique event ID that the control unit has previously been described as generating for each door opening event.

In addition, the disarm node would also transmit a report (event #2) to the control unit indicating the selector that was activated - i.e. informing the central unit of the user's request. The report from the disarm node also includes the disarm node identifier and the unique event ID (if used). A user portable authentication device receiving such a wake up message responds by transmitting (event #4) a message to the central unit, including the unique event ID (if used) and its own ID. Preferably, the user's portable authentication device is also configured to perform RSSI measurement on wake up messages received from the disarm node and to include information on these RSSI measurements in the message sent to the control unit.

In an alternative second embodiment the externally located disarm node would react to operation of one of the selectors (event #1) by using its RF transceiver to send a change status request message to the control unit (event #2) , including the details of the change requested, together with the disarm node ID. The central node would transmit (event #3) a response including the disarm node ID preferably together with a unique event identifier (e.g. a random number) which is effective to cause the disarm node to start a wake on radio process. The response from the central unit could include a command for the disarm node, or the system could be arranged so that the disarm node responds to receiving a message from the central unit that preferably includes a unique event identifier together with the disarm node's ID by starting the wake on radio process. The disarm node receiving such a response, including its own ID, would use its RF transceiver to transmit (event #4) wake on radio signals, including the unique event identifier (if used). A portable authentication device receiving the wake on radio signals would wake and transmit a signal (event #5) including its own ID, and the unique event identifier (if used). If, as preferred, the portable authentication device includes an accelerometer, as previously described, then the portable authentication device processor will determine whether the portable authentication device is stationary or not, and only transmit the response in the event that the portable authentication device is not deemed to be stationary. Preferably, the user portable authentication device is also configured to perform RSSI measurement on wake up messages received from the disarm node and to include information on these RSSI measurements in the message sent to the central unit.

With both the first and second embodiment of this aspect of the invention the sequence of operations continues as follows.

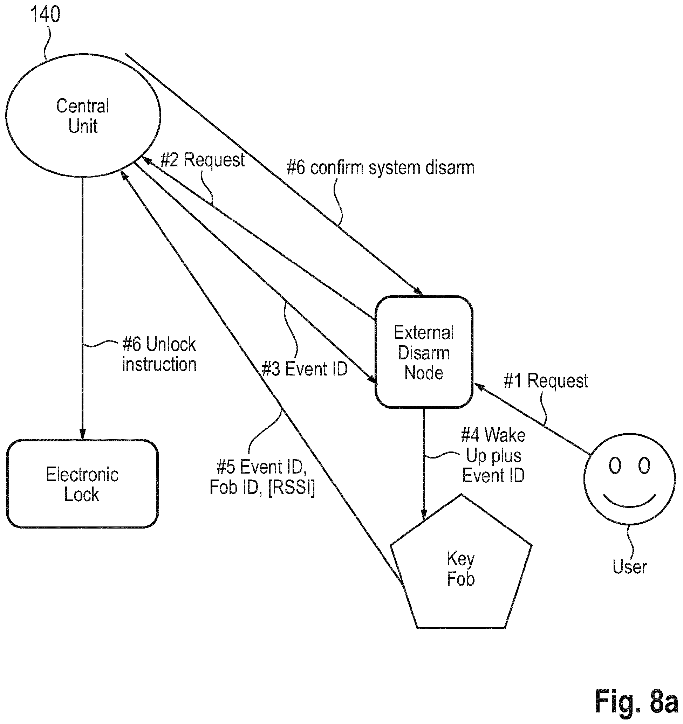

The central unit, on receiving the message from the user's portable authentication device checks to determine whether portable authentication device ID included in the message is one registered with the central unit, and also whether the event ID matches that of a "current" event. If the message received from the user portable authentication device includes RSSI information, the central unit will also take this into account in deciding whether the status change request is a valid one. If the central unit is determined to be valid, then the central unit actions the request by, for example sending an unlock command to the relevant door lock (event #6 in Figure 8a, and event #5 in Figure 8b) and disarming the security monitoring system, or by sending a lock command to the relevant door lock and arming the system. In addition, the central unit may be configured to send a status change notification to the disarm node (event #6 in Figure 8a, and event #5 in Figure 8b), including the disarm node ID, so that the disarm node can indicate the change of status visibly and or audibly.

Also, if the user portable authentication device includes a haptic device, the central unit may transmit an instruction to the fob portable authentication device to cause the portable authentication device to activate the haptic device to indicate completion of the requested action. A portable authentication device having one or more visual indicators, e.g. one or more LEDs, may also be triggered to provide a visual indication of completion of a requested action.

A portable authentication device having a haptic element may also be configured to provide haptic feedback on receipt of a wake up message from a disarm node (preferably a different mode of feedback from that for successful completion of a requested action), so that a user knows that the portable authentication device has been "found" by the disarm node.

The control unit may optionally transmit an action request "failure" message, including the disarm node ID, that the disarm node can use to provide feedback of failure to complete a requested action. The central unit can also send a failure message, including the portable authentication device ID, that the portable authentication device can use to provide feedback of failure to complete a requested action.

If the security monitoring system having a disarm node outside the monitored building or monitored zone is one which is connected to a central monitoring station, it can be useful for the registered owner of the security monitoring system to be informed of failed requests to change status. In particular, where an action request is made by operation of an event selector, and no authorised portable authentication device is found - or signals are received from a non-authorised source, details of the event may be reported by the control unit to the central monitoring station. The central monitoring station can act on such reports, by for example, sending human operatives to survey the premises, but may also send such reports to the registered owner. For example, the registered user may have a smartphone "app" which may be arranged receive notifications from the central monitoring station. The central monitoring station may be arranged to provide real time or near real time notification of failed action requests. Such a system may be further enhanced by providing notifications to the app of action requests and their results both for success and for failure, by configuring the central unit to report all such action requests and their results to the central monitoring unit.

A security monitoring system using an externally mounted disarm node could also benefit from including portable authentication devices (e.g. keyfobs) provided with an accelerometer, as described in the context of the earlier embodiments, to avoid problems with a stationary keyfob enabling the disarming of the system and the unlocking of the electronically controlled lock.

## Claims

1. A portable authentication device (300) for use with a security monitoring system (100) for a building (110) or a secured space within a building or other fixed property, the system including:
a control unit (140) for controlling, arming and disarming the security monitoring system;
a detector (130, 290) to detect the breaching of an entrance giving access to the building or the secured space;
a disarm node (270) for disarming the system, the disarm node (270) having a user interface (485) to receive a user input to disarm the system, and a radio frequency transmitter (520) to transmit, in consequence of the user input, a disarm signal to the control unit (140); the portable authentication device (300) comprising:
a radio frequency transceiver (610),
a memory (605) storing a portable authentication device ID,
a motion sensor
and a processor (600) operatively connected to the transceiver (610), the motion sensor and the memory;
wherein the motion sensor is configured to sense motion of the portable authentication device (300) and to provide an output based on sensed motion of the portable authentication device (300), and wherein the processor (600) is configured to determine whether the portable authentication device is stationary or in motion, based on the output of the motion sensor;
wherein the portable authentication device is configured to receive a disarm instruction, via the transceiver (610) , from the disarm node (270) to transmit to the control unit (140) a disarm request containing the portable authentication device ID; and wherein the processor (600) is configured to transmit the instructed disarm request only if, when the instruction is received, the portable authentication device is not deemed to be stationary.

2. The portable authentication device according to claim 1, wherein the portable authentication device is deemed to be stationary if the motion sensor senses no motion at the time the instruction is received.

3. The portable authentication device according to claim 1, wherein the portable authentication device is deemed to be stationary if the motion sensor has sensed no motion of the portable authentication device during a predetermined period preceding the time when the instruction is received.

4. The portable authentication device according to any one of the preceding claims, wherein the portable authentication device (300) is configured to transmit to the control unit (140) the disarm request including a disarm transmission identifier received in the disarm instruction from the disarm node (270).

5. The portable authentication device according to any one of the preceding claims, wherein the portable authentication device (300) is configured to:
periodically wake from a sleep state in which its transceiver (610) is inactive into a part active state in which part only of the transceiver (610) is activated to perform an RSSI check for a first period;
revert to the sleep state at the end of the first period unless the RSSI check reveals an RSSI level above a predetermined threshold;
remain in the part active state for a second period, in the event that the RSSI check reveals an RSSI level above a predetermined threshold, to detect the presence of a synch word;
revert to the sleep state unless a synch word is detected before the end of the second period; and
fully activate the transceiver (610) for a third period, if a synch word is detected within the second period, to listen for a wake on radio packet, and optionally
wherein the duration of the period between waking events is at least one second.

6. The portable authentication device according to any one of the preceding claims, wherein the portable authentication device (300) is further configured to determine the RSSI level of each of a plurality of messages received from the disarm node; and to include in the disarm request sent to the control unit information on the determined RSSI levels.

7. The portable authentication device (300) according to any one of the preceding claims, wherein the portable authentication device is further configured to receive an instruction other than a disarm instruction via the transceiver (610), including a flag, from the control unit (140) to perform an action; and wherein in the event that the other instruction includes the flag, the processor (600) is configured to cause the portable authentication device to perform the instructed action whether or not, when the instruction is received, the portable authentication device is determined to be stationary.

8. The portable authentication device of claim 7, wherein the portable authentication device (300) includes one or more of:
a visual indicator, an audio transducer, a haptic transducer, and is further configured to generate an output using one or more of these when so instructed by a received instruction including the flag.

9. The portable authentication device of any one of the claims 1 to 7, wherein the portable authentication device includes a haptic transducer and is further configured to generate an output using the haptic transducer in response to receiving the disarm instruction.

10. The portable authentication device of any one of the preceding claims, wherein the radio frequency transceiver (610) of the portable authentication device (300) is configured to receive the disarm instruction on a frequency in the 869.7 to 870 MHz band.

11. The portable authentication device of any one of the preceding claims, wherein the portable authentication device (300) is configured to:
receive the disarm instruction on a first radio channel, the disarm instruction including instructions to transmit the disarm message containing the portable authentication device ID on a second radio channel whose transmission parameters are different from those of the first radio channel and are specified in the received instructions; and to control the transceiver to transmit the message containing the portable authentication device ID on the second radio channel using the specified transmission parameters, and optionally
wherein the portable authentication device (300) is configured to control the transceiver (610) to transmit the message containing a disarm transmission identifier received in the disarm instruction.

12. The portable authentication device of any one of the preceding claims, wherein the portable authentication device (300) is configured to shut down its transceiver (610) once the portable authentication device is deemed to be stationary, and optionally wherein the portable authentication device (300) is configured not to power up its transceiver (610) again until the processor (600) again determines that the portable authentication device is in motion.

13. The portable authentication device of any one of the preceding claims, wherein the motion sensor comprises an accelerometer, optionally a 3-axis accelerometer.

14. A security monitoring system (100) for a building (110) or a secured space within a building or other fixed property, the system (100) including:
a detector (130, 290) to detect the breaching of an entrance giving access to the building (110) or the secured space;
a control unit (140);
a disarm node (270) for disarming the system, the node (270) having a user interface (485) to receive a user input to disarm the system (100), and a radio frequency transmitter (520) to transmit, in consequence of the user input, a disarm signal to the control unit (140);
and a portable authentication device (300) as claimed in any one of claims 1 to 3 to permit hands-free disarming of the security monitoring system;
the control unit (140) having a radio frequency transceiver (420, 430), and a memory (410) storing a portable authentication device identity for the portable authentication device (300);
the control unit (140) being configured:
in response to receiving a notification of an entrance breach from the detector (130), to:
(i) start an entry period timer;
(ii) transmit a wake up message to the disarm node to cause the RF transmitter of the disarm node to transmit a wake up signal/beacon to wake the portable authentication device; and
(iii) in response to receiving, before expiry of the entry period timer, a radio frequency disarm signal from the portable authentication device that includes the registered portable authentication device identity, to disarm the security monitoring system; and
(iv) in the event that the security monitoring system is not disarmed before expiry of the entry period, to cause the security monitoring system to enter an alarm state;
(v) wherein, additionally either: the control unit (140) is configured to start a hands-free disarm timer in response to receiving a notification of an entrance breach from the detector (130, 290), and in the event that no RF signal including the registered portable authentication device identity is received before the hands-free disarm timer expires, to transmit a signal to the node (270) to cause the disarm node to provide a notification to the effect that the attempted hands-free disarm has failed; or
(vi) the disarm node (300) is configured to start its own hands-free disarm timer in response to receiving the wake up message from the control unit, and, in the event that the hands-free disarm timer of the disarm node expires without the disarm node having been informed by the control unit of disarming of the security monitoring system, to provide a notification to the effect that the attempted hands-free disarm has failed.

15. The security monitoring system as claimed in claim 14, wherein the control unit (140) is configured to:
include a disarm transmission identifier in the wake up message, and the wake up message is arranged to cause the disarm node to include the disarm transmission identifier in the wake up signal/beacon transmitted from the RF transmitter of the disarm node;
only disarm the security monitoring system in response to receiving before expiry of the entry period timer a radio frequency disarm signal including the registered portable authentication device identity from the portable authentication device if the disarm signal also includes the disarm transmission identifier; and
in the case that the control unit (140) is configured to start a hands free disarm timer, to transmit a signal to cause the disarm node (270) to provide a notification to the effect that the attempted hands-free disarm has failed only if no RF signal including the registered portable authentication device identity and the disarm transmission identifier is received before the hands-free disarm timer expires.

16. The security monitoring system as claimed in claim 14 or 15, including multiple disarm nodes (300) each associated with a different entrance giving access to the building (110) or the secured space, each disarm node having a unique disarm node ID, each of the different entrances having a respective detector (130, 290) with a different respective ID, and the control unit (140) storing the disarm node IDs, the detector IDs, and an association between each detector and an associated one of the disarm nodes; wherein
the control unit (140) is configured, in response to receiving an entrance breach notification from a detector (130, 290), to use a detector identifier included in the received notification to identify the associated disarm node (270) and to include the disarm node identifier for the identified disarm node in the transmitted wake-up message to selectively target the identified disarm node among the multiple disarm nodes of the system.

17. The security monitoring system of any one of claims 14 to 16, wherein the or each detector is a movement detector (290), for example a PIR detector.

18. The security monitoring system of any one of claim 14 to 17, wherein the or each detector is a door sensor (130), for example a magnetic contact sensor.

19. The security monitoring system of any one of claims 14 to 18, wherein the portable authentication device (300) is configured to:
periodically wake from a sleep state in which its transceiver (610) is inactive into a part active state in which part only of the transceiver is activated to perform an RSSI check for a first period;
revert to the sleep state at the end of the first period unless the RSSI check reveals an RSSI level above a predetermined threshold;
remain in the part active state for a second period, in the event that the RSSI check reveals an RSSI level above a predetermined threshold, to detect the presence of a synch word;
revert to the sleep state unless a synch word is detected before the end of the second period; and
fully activate its transceiver (610) for a third period, if a synch word is detected within the second period, to listen for a wake on radio packet.

20. The security monitoring system of any one of claims 14 to 19, wherein the portable authentication device (300) is configured to determine the RSSI level of each of one or more messages received from the disarm node; and to
include in the disarm request sent to the control unit information on the determined RSSI levels, and optionally
wherein the control unit (140) is configured to disarm the security monitoring system in response to receiving the radio frequency disarm signal from the portable authentication device (300) only in the event that the RSSI information satisfies predetermined criteria.

21. A method of operating a portable authentication device (300) for use with a security monitoring system (100) for a building (110) or a secured space within a building or other fixed property, the system (100) including:
a control unit (140) for controlling, arming and disarming the security monitoring system;
a detector (130, 290) to detect the breaching of an entrance giving access to the building or the secured space;
a disarm node (270) for disarming the system, the node (270) having a user interface (485) to receive a user input to disarm the system, and a radio frequency transmitter (520) to transmit, in consequence of the user input, a disarm signal to the control unit (140); the portable authentication device (300) comprising:
a radio frequency transceiver (610),
a memory (605) storing a portable authentication device ID,
a motion sensor
and a processor (600) operatively connected to the transceiver, the motion sensor and the memory;
the method comprising:
using the motion sensor to sense motion of the portable authentication device (300);
providing an output based on sensed motion of the portable authentication device;
determining, using the processor (600), whether the portable authentication device (300) is stationary or in motion, based on the output of the motion sensor;
receiving a disarm instruction, via the transceiver (610), from the disarm node (270) to transmit to the control unit (140) a disarm request containing the portable authentication device ID; and when the instruction is received, determining whether the portable authentication device (300) is deemed to be stationary;
and, only if the portable authentication device is deemed not to be stationary, transmitting the instructed disarm request.

22. The method of claim 21, wherein the disarm instruction received by the transceiver (610) includes a disarm transmission identifier and an instruction to include the disarm transmission identifier in the disarm request.

23. The method of claim 21 or claim 22, wherein the portable authentication device (300) is deemed to be stationary if the motion sensor senses no motion at the time the instruction is received.

24. The method of claim 21 or claim 22, wherein the portable authentication device (300) is deemed to be stationary if the motion sensor has sensed no motion of the portable authentication device during a predetermined period preceding the time when the instruction is received.

25. The method of any one of claims 21 to 24, further comprising:
determining the RSSI level of one or more messages received from the disarm node; and
including in the disarm request sent to the control unit information on the determined RSSI levels.

26. The method of any one of claims 21 to 25, further comprising, after transmitting the disarm request to the control unit:
receiving an instruction from the control unit (140) to generate a signal indicating successful disarming of the system; and
generating the signal indicating successful disarming of the system.

27. The method of any one of claims 21 to 26, including shutting down the portable authentication device transceiver (610) in the event that the portable authentication device (300) is deemed to be stationary, and optionally maintaining the portable authentication device's transceiver (610) in a shut-down state until the processor (600) again determines that the portable authentication device is in motion; and powering up the portable authentication device transceiver (610) once the processor determines that the portable authentication device is in motion.

28. The method of any one of claims 21 to 24, wherein the portable authentication device (300):
periodically wakes from a sleep state in which its transceiver (610) is inactive into a part active state in which part only of the transceiver is activated to perform an RSSI check for a first period;
reverts to the sleep state at the end of the first period unless the RSSI check reveals an RSSI level above a predetermined threshold;
remains in the part active state for a second period, in the event that the RSSI check reveals an RSSI level above a predetermined threshold, and listens for the presence of a synch word;
reverts to the sleep state unless a synch word is detected before the end of the second period; and
fully activates its transceiver for a third period, if a synch word is detected within the second period, and listens for a wake on radio packet.

## Patentansprüche

1. Tragbare Authentifizierungsvorrichtung (300) zur Verwendung mit einem Sicherheitsüberwachungssystem (100) für ein Gebäude (110) oder einen gesicherten Raum innerhalb eines Gebäudes oder einer anderen Immobilie, wobei das System Folgendes aufweist:
eine Steuereinheit (140) zur Steuerung, Aktivierung und Deaktivierung des Sicherheitsüberwachungssystems,
einen Detektor (130, 290) zur Erfassung des Eindringens in einen Eingang, der Zugang zu dem Gebäude oder dem gesicherten Raum gewährt,
einen Deaktivierungsknoten (270) zur Deaktivierung des Systems, wobei der Deaktivierungsknoten (270) eine Benutzerschnittstelle (485) zum Empfangen einer Benutzereingabe zur Deaktivierung des Systems und einen Funkfrequenzsender (520) zum Senden eines Deaktivierungssignals an die Steuereinheit (140) als Folge der Benutzereingabe aufweist, wobei die tragbare Authentifizierungsvorrichtung (300) Folgendes umfasst:
einen Funkfrequenz-Sender/Empfänger (610),
einen Speicher (605), in dem eine Kennung der tragbaren Authentifizierungsvorrichtung gespeichert ist,
einen Bewegungsmelder
und einen Prozessor (600), der mit dem Sender/Empfänger (610), dem Bewegungsmelder und dem Speicher in Wirkverbindung steht,
wobei der Bewegungsmelder so eingerichtet ist, dass er eine Bewegung der tragbaren Authentifizierungsvorrichtung (300) erfasst und anhand einer erfassten Bewegung der tragbaren Authentifizierungsvorrichtung (300) ein Ausgangssignal liefert, und wobei der Prozessor (600) so eingerichtet ist, dass er anhand des Ausgangssignals des Bewegungsmelders feststellt, ob die tragbare Authentifizierungsvorrichtung stillsteht oder in Bewegung ist,
wobei die tragbare Authentifizierungsvorrichtung so eingerichtet ist, dass sie von dem Deaktivierungsknoten (270) über den Sender/Empfänger (610) eine Deaktivierungsanweisung empfängt, an die Steuereinheit (140) eine Deaktivierungsanforderung zu senden, in der die Kennung der tragbaren Authentifizierungsvorrichtung enthalten ist, und wobei der Prozessor (600) so eingerichtet ist, dass er die angewiesene Deaktivierungsanforderung nur dann sendet, wenn die tragbare Authentifizierungsvorrichtung bei Empfang der Anweisung nicht als stillstehend gilt.

2. Tragbare Authentifizierungsvorrichtung nach Anspruch 1, wobei die tragbare Authentifizierungsvorrichtung als stillstehend gilt, wenn der Bewegungsmelder zum Zeitpunkt des Empfangs der Anweisung keine Bewegung erfasst.

3. Tragbare Authentifizierungsvorrichtung nach Anspruch 1, wobei die tragbare Authentifizierungsvorrichtung als stillstehend gilt, wenn der Bewegungsmelder während eines vorbestimmten Zeitraums, der dem Zeitpunkt des Empfangs der Anweisung vorausgeht, keine Bewegung der tragbaren Authentifizierungsvorrichtung erfasst hat.

4. Tragbare Authentifizierungsvorrichtung nach einem der vorhergehenden Ansprüche, wobei die tragbare Authentifizierungsvorrichtung (300) so eingerichtet ist, dass sie die Deaktivierungsanforderung, die eine in der Deaktivierungsanweisung von dem Deaktivierungsknoten (270) empfangene Deaktivierungsübertragungskennzeichnung aufweist, an die Steuereinheit (140) sendet.

5. Tragbare Authentifizierungsvorrichtung nach einem der vorhergehenden Ansprüche, wobei die tragbare Authentifizierungsvorrichtung (300) so eingerichtet ist, dass sie:
periodisch aus einem Schlafzustand, in dem ihr Sender/Empfänger (610) inaktiv ist, in einen teilweise aktiven Zustand aufwacht, in dem nur ein Teil des Sender/Empfängers (610) aktiviert ist, um eine RSSI-Überprüfung über einen ersten Zeitraum durchzuführen,
am Ende des ersten Zeitraums in den Schlafzustand zurückkehrt, es sei denn, die RSSI-Überprüfung zeigt einen RSSI-Pegel oberhalb eines vorbestimmten Schwellenwerts,
in dem Fall, dass die RSSI-Überprüfung einen RSSI-Pegel oberhalb eines vorbestimmten Schwellenwerts ergibt, über einen zweiten Zeitraum in dem teilweise aktiven Zustand bleibt, um das Vorhandensein eines Synchronworts zu erfassen,
in den Schlafzustand zurückkehrt, sofern nicht vor dem Ende des zweiten Zeitraums ein Synchronwort erfasst wird, und
den Sender/Empfänger (610) über einen dritten Zeitraum vollständig aktiviert, wenn innerhalb des zweiten Zeitraums ein Synchronwort erfasst wird, um auf ein Wake-on-Radio-Paket zu warten, und optional
wobei die Dauer des Zeitraums zwischen Weckereignissen mindestens eine Sekunde beträgt.

6. Tragbare Authentifizierungsvorrichtung nach einem der vorhergehenden Ansprüche, wobei die tragbare Authentifizierungsvorrichtung (300) ferner so eingerichtet ist, dass sie den RSSI-Pegel jeder von mehreren von dem Deaktivierungsknoten empfangenen Nachrichten bestimmt und Informationen über die bestimmten RSSI-Pegel in die an die Steuereinheit gesendete Deaktivierungsanforderung aufnimmt.

7. Tragbare Authentifizierungsvorrichtung (300) nach einem der vorhergehenden Ansprüche, wobei die tragbare Authentifizierungsvorrichtung ferner so eingerichtet ist, dass sie über den Sender/Empfänger (610) von der Steuereinheit (140) eine andere Anweisung als eine Deaktivierungsanweisung empfängt, die ein Flag enthält, eine Aktion auszuführen, und wobei in dem Fall, dass die andere Anweisung das Flag enthält, der Prozessor (600) so eingerichtet ist, dass er bewirkt, dass die tragbare Authentifizierungsvorrichtung die angewiesene Aktion unabhängig davon ausführt, ob festgestellt wird, dass die tragbare Authentifizierungsvorrichtung bei Empfang der Anweisung stillsteht oder nicht.

8. Tragbare Authentifizierungsvorrichtung nach Anspruch 7, wobei die tragbare Authentifizierungsvorrichtung (300) eines oder mehrere der Folgenden aufweist:
eine optische Anzeige, einen Schallwandler, einen haptischen Wandler, und ferner so eingerichtet ist, dass sie unter Verwendung eines oder mehrerer davon ein Ausgangssignal erzeugt, wenn sie von einer empfangenen Anweisung, die das Flag enthält, dahingehend angewiesen wird.

9. Tragbare Authentifizierungsvorrichtung nach einem der Ansprüche 1 bis 7, wobei die tragbare Authentifizierungsvorrichtung einen haptischen Wandler aufweist und ferner so eingerichtet ist, dass sie als Reaktion auf den Empfang der Deaktivierungsanweisung unter Verwendung des haptischen Wandlers ein Ausgangssignal erzeugt.

10. Tragbare Authentifizierungsvorrichtung nach einem der vorhergehenden Ansprüche, wobei der Funkfrequenz-Sender/Empfänger (610) der tragbaren Authentifizierungsvorrichtung (300) so eingerichtet ist, dass er die Deaktivierungsanweisung auf einer Frequenz im Bereich von 869,7 bis 870 MHz empfängt.

11. Tragbare Authentifizierungsvorrichtung nach einem der vorhergehenden Ansprüche, wobei die tragbare Authentifizierungsvorrichtung (300) so eingerichtet ist, dass sie:
die Deaktivierungsanweisung auf einem ersten Funkkanal empfängt, wobei die Deaktivierungsanweisung Anweisungen aufweist, die Deaktivierungsnachricht, die die Kennung der tragbaren Authentifizierungsvorrichtung enthält, auf einem zweiten Funkkanal zu senden, dessen Übertragungsparameter sich von denen des ersten Funkkanals unterscheiden und in den empfangenen Anweisungen spezifiziert sind, und den Sender/Empfänger so ansteuert, dass er die Nachricht, die die Kennung der tragbaren Authentifizierungsvorrichtung enthält, unter Verwendung der spezifizierten Übertragungsparameter auf dem zweiten Funkkanal sendet, und optional
wobei die tragbare Authentifizierungsvorrichtung (300) so eingerichtet ist, dass sie den Sender/Empfänger (610) so ansteuert, dass er die Nachricht sendet, die eine in der Deaktivierungsanweisung empfangene Deaktivierungsübertragungskennzeichnung enthält.

12. Tragbare Authentifizierungsvorrichtung nach einem der vorhergehenden Ansprüche, wobei die tragbare Authentifizierungsvorrichtung (300) so eingerichtet ist, dass sie ihren Sender/Empfänger (610) abschaltet, sobald die tragbare Authentifizierungsvorrichtung als stillstehend gilt, und optional
wobei die tragbare Authentifizierungsvorrichtung (300) so eingerichtet ist, dass sie ihren Sender/Empfänger (610) erst dann wieder einschaltet, wenn der Prozessor (600) wieder feststellt, dass die tragbare Authentifizierungsvorrichtung in Bewegung ist.

13. Tragbare Authentifizierungsvorrichtung nach einem der vorhergehenden Ansprüche, wobei der Bewegungsmelder einen Beschleunigungsmesser umfasst, optional einen 3-Achsen-Beschleunigungsmesser.

14. Sicherheitsüberwachungssystem (100) für ein Gebäude (110) oder einen gesicherten Raum innerhalb eines Gebäudes oder einer anderen Immobilie, wobei das System (100) Folgendes aufweist:
einen Detektor (130, 290) zur Erfassung des Eindringens in einen Eingang, der Zugang zu dem Gebäude (110) oder dem gesicherten Raum gewährt,
eine Steuereinheit (140);
einen Deaktivierungsknoten (270) zur Deaktivierung des Systems, wobei der Knoten (270) eine Benutzerschnittstelle (485) zum Empfangen einer Benutzereingabe zur Deaktivierung des Systems (100) und einen Funkfrequenzsender (520) zum Senden eines Deaktivierungssignals an die Steuereinheit (140) als Folge der Benutzereingabe aufweist,
und eine tragbare Authentifizierungsvorrichtung (300) nach einem der Ansprüche 1 bis 3, die eine freihändige Deaktivierung des Sicherheitsüberwachungssystems ermöglicht,
wobei die Steuereinheit (140) einen Funkfrequenz-Sender/Empfänger (420, 430) und einen Speicher (410) aufweist, in dem eine Identität der tragbaren Authentifizierungsvorrichtung für die tragbare Authentifizierungsvorrichtung (300) gespeichert ist, wobei die Steuereinheit (140) so eingerichtet ist, dass sie:
als Reaktion auf den Empfang einer Benachrichtigung vom Detektor (130) über ein Eindringen in einen Eingang:
(i) einen Eintrittszeitraumzeitgeber startet,
(ii) eine Wecknachricht an den Deaktivierungsknoten sendet, um den HF-Sender des Deaktivierungsknotens zu veranlassen, ein Wecksignal/Lichtsignal zu senden, um die tragbare Authentifizierungsvorrichtung zu wecken, und
(iii) als Reaktion auf den Empfang eines Funkfrequenzdeaktivierungssignals von der tragbaren Authentifizierungsvorrichtung vor Ablauf des Eintrittszeitraumzeitgebers, das die registrierte Identität der tragbaren Authentifizierungsvorrichtung enthält, das Sicherheitsüberwachungssystem deaktiviert, und
(iv) in dem Fall, dass das Sicherheitsüberwachungssystem vor Ablauf des Eintrittszeitraums nicht deaktiviert ist, bewirkt, dass das Sicherheitsüberwachungssystem in einen Alarmzustand eintritt,
(v) wobei zusätzlich entweder: die Steuereinheit (140) so eingerichtet ist, dass sie als Reaktion auf den Empfang einer Benachrichtigung vom Detektor (130, 290) über ein Eindringen in einen Eingang einen Freihanddeaktivierungszeitgeber startet, und in dem Fall, dass vor Ablauf des Freihanddeaktivierungszeitgebers kein HF-Signal, das die registrierte Identität der tragbaren Authentifizierungsvorrichtung enthält, empfangen wird, ein Signal an den Knoten (270) sendet, um zu bewirken, dass der Deaktivierungsknoten eine Benachrichtigung dahingehend liefert, dass die versuchte freihändige Deaktivierung fehlgeschlagen ist, oder
(vi) der Deaktivierungsknoten (300) so eingerichtet ist, dass er als Reaktion auf den Empfang der Wecknachricht von der Steuereinheit seinen eigenen Freihanddeaktivierungszeitgeber startet und in dem Fall, dass der Freihanddeaktivierungszeitgeber des Deaktivierungsknotens abläuft, ohne dass der Deaktivierungsknoten von der Steuereinheit über eine Deaktivierung des Sicherheitsüberwachungssystems informiert wurde, eine Benachrichtigung dahingehend liefert, dass die versuchte freihändige Deaktivierung fehlgeschlagen ist.

15. Sicherheitsüberwachungssystem nach Anspruch 14, wobei die Steuereinheit (140) so eingerichtet ist, dass sie:
eine Deaktivierungsübertragungskennzeichnung in die Wecknachricht aufnimmt, und die Wecknachricht so ausgeführt ist, dass sie bewirkt, dass der Deaktivierungsknoten die Deaktivierungsübertragungskennzeichnung in das von dem HF-Sender des Deaktivierungsknotens gesendete Wecksignal/Lichtsignal aufnimmt,
das Sicherheitsüberwachungssystem als Reaktion auf den Empfang eines Funkfrequenzdeaktivierungssignals, das die registrierte Identität der tragbaren Authentifizierungsvorrichtung enthält, von der tragbaren Authentifizierungsvorrichtung vor Ablauf des Eintrittszeitraumzeitgebers nur dann deaktiviert, wenn das Deaktivierungssignal auch die Deaktivierungsübertragungskennzeichnung enthält, und
in dem Fall, dass die Steuereinheit (140) so eingerichtet ist, dass sie einen Freihanddeaktivierungszeitgeber startet, nur dann ein Signal sendet, das bewirkt, dass der Deaktivierungsknoten (270) eine Benachrichtigung dahingehend liefert, dass die versuchte freihändige Deaktivierung fehlgeschlagen ist, wenn kein HF-Signal, das die registrierte Identität der tragbaren Authentifizierungsvorrichtung und die Deaktivierungsübertragungskennzeichnung enthält, empfangen wird, bevor der Freihanddeaktivierungszeitgeber abläuft.

16. Sicherheitsüberwachungssystem nach Anspruch 14 oder 15, das mehrere Deaktivierungsknoten (300) aufweist, von denen jeder einem anderen Eingang zugeordnet ist, der Zugang zu dem Gebäude (110) oder dem gesicherten Raum gewährt, wobei jeder Deaktivierungsknoten eine eindeutige Deaktivierungsknotenkennung hat, wobei jeder der verschiedenen Eingänge einen jeweiligen Detektor (130, 290) mit einer jeweils anderen Kennung hat und die Steuereinheit (140) die Deaktivierungsknotenkennungen, die Detektorkennungen sowie eine Zuordnung zwischen jedem Detektor und einem zugeordneten der Deaktivierungsknoten speichert, wobei
die Steuereinheit (140) so eingerichtet ist, dass sie als Reaktion auf den Empfang einer Benachrichtigung von einem Detektor (130, 290) über ein Eindringen in einen Eingang eine in der empfangenen Benachrichtigung enthaltene Detektorkennung verwendet, um den zugeordneten Deaktivierungsknoten (270) zu ermitteln und die Deaktivierungsknotenkennung für den ermittelten Deaktivierungsknoten in die gesendete Wecknachricht aufzunehmen, um sich gezielt an den ermittelten Deaktivierungsknoten unter den mehreren Deaktivierungsknoten des Systems zu richten.

17. Sicherheitsüberwachungssystem nach einem der Ansprüche 14 bis 16, wobei der oder jeder Detektor ein Bewegungsdetektor (290), zum Beispiel ein PIR-Detektor, ist.

18. Sicherheitsüberwachungssystem nach einem der Ansprüche 14 bis 17, wobei der oder jeder Detektor ein Türsensor (130), zum Beispiel ein Magnetkontaktsensor, ist.

19. Sicherheitsüberwachungssystem nach einem der Ansprüche 14 bis 18, wobei die tragbare Authentifizierungsvorrichtung (300) so eingerichtet ist, dass sie:
periodisch aus einem Schlafzustand, in dem ihr Sender/Empfänger (610) inaktiv ist, in einen teilweise aktiven Zustand aufwacht, in dem nur ein Teil des Sender/Empfängers aktiviert ist, um eine RSSI-Überprüfung über einen ersten Zeitraum durchzuführen,
am Ende des ersten Zeitraums in den Schlafzustand zurückkehrt, es sei denn, die RSSI-Überprüfung zeigt einen RSSI-Pegel oberhalb eines vorbestimmten Schwellenwerts,
in dem Fall, dass die RSSI-Überprüfung einen RSSI-Pegel oberhalb eines vorbestimmten Schwellenwerts ergibt, über einen zweiten Zeitraum in dem teilweise aktiven Zustand bleibt, um das Vorhandensein eines Synchronworts zu erfassen,
in den Schlafzustand zurückkehrt, sofern nicht vor dem Ende des zweiten Zeitraums ein Synchronwort erfasst wird, und
ihren Sender/Empfänger (610) über einen dritten Zeitraum vollständig aktiviert, wenn innerhalb des zweiten Zeitraums ein Synchronwort erfasst wird, um auf ein Wake-on-Radio-Paket zu warten.

20. Sicherheitsüberwachungssystem nach einem der Ansprüche 14 bis 19, wobei die tragbare Authentifizierungsvorrichtung (300) so eingerichtet ist, dass sie den RSSI-Pegel jeder von einer oder mehreren vom Deaktivierungsknoten empfangenen Nachrichten bestimmt und
Informationen über die bestimmten RSSI-Pegel in die an die Steuereinheit gesendete Deaktivierungsanforderung aufnimmt, und optional
wobei die Steuereinheit (140) so eingerichtet ist, dass sie das Sicherheitsüberwachungssystem als Reaktion auf den Empfang des Funkfrequenzdeaktivierungssignals von der tragbaren Authentifizierungsvorrichtung (300) nur in dem Fall deaktiviert, dass die RSSI-Informationen vorbestimmten Kriterien genügen.

21. Verfahren zum Betreiben einer tragbaren Authentifizierungsvorrichtung (300) zur Verwendung mit einem Sicherheitsüberwachungssystem (100) für ein Gebäude (110) oder einen gesicherten Raum innerhalb eines Gebäudes oder einer anderen Immobilie, wobei das System (100) Folgendes aufweist:
eine Steuereinheit (140) zur Steuerung, Aktivierung und Deaktivierung des Sicherheitsüberwachungssystems,
einen Detektor (130, 290) zur Erfassung des Eindringens in einen Eingang, der Zugang zu dem Gebäude oder dem gesicherten Raum gewährt,
einen Deaktivierungsknoten (270) zur Deaktivierung des Systems, wobei der Knoten (270) eine Benutzerschnittstelle (485) zum Empfangen einer Benutzereingabe zur Deaktivierung des Systems und einen Funkfrequenzsender (520) zum Senden eines Deaktivierungssignals an die Steuereinheit (140) als Folge der Benutzereingabe aufweist, wobei die tragbare Authentifizierungsvorrichtung (300) Folgendes umfasst:
einen Funkfrequenz-Sender/Empfänger (610),
einen Speicher (605), in dem eine Kennung der tragbaren Authentifizierungsvorrichtung gespeichert ist,
einen Bewegungsmelder
und einen Prozessor (600), der mit dem Sender/Empfänger, dem Bewegungsmelder und dem Speicher in Wirkverbindung steht,
wobei das Verfahren Folgendes umfasst:
Verwenden des Bewegungsmelders zur Erfassung einer Bewegung der tragbaren Authentifizierungsvorrichtung (300); Liefern eines Ausgangssignals anhand einer erfassten Bewegung der tragbaren Authentifizierungsvorrichtung;
Feststellen, anhand des Ausgangssignals des Bewegungsmelders und unter Verwendung des Prozessors (600), ob die tragbare Authentifizierungsvorrichtung (300) stillsteht oder in Bewegung ist;
Empfangen einer Deaktivierungsanweisung von dem Deaktivierungsknoten (270) über den Sender/Empfänger (610), an die Steuereinheit (140) eine Deaktivierungsanforderung zu senden, in der die Kennung der tragbaren Authentifizierungsvorrichtung enthalten ist; und wenn die Anweisung empfangen wird, Feststellen, ob die tragbare Authentifizierungsvorrichtung (300) als stillstehend gilt;
und Senden der angewiesenen Deaktivierungsanforderung nur dann, wenn die tragbare Authentifizierungsvorrichtung nicht als stillstehend gilt.

22. Verfahren nach Anspruch 21, bei dem die von dem Sender/Empfänger (610) empfangene Deaktivierungsanweisung eine Deaktivierungsübertragungskennzeichnung und eine Anweisung enthält, die Deaktivierungsübertragungskennzeichnung in die Deaktivierungsanforderung aufzunehmen.

23. Verfahren nach Anspruch 21 oder Anspruch 22, bei dem die tragbare Authentifizierungsvorrichtung (300) als stillstehend gilt, wenn der Bewegungsmelder zum Zeitpunkt des Empfangs der Anweisung keine Bewegung erfasst.

24. Verfahren nach Anspruch 21 oder Anspruch 22, bei dem die tragbare Authentifizierungsvorrichtung (300) als stillstehend gilt, wenn der Bewegungsmelder während eines vorbestimmten Zeitraums, der dem Zeitpunkt des Empfangs der Anweisung vorausgeht, keine Bewegung der tragbaren Authentifizierungsvorrichtung erfasst hat.

25. Verfahren nach einem der Ansprüche 21 bis 24, das ferner Folgendes umfasst:
Bestimmen des RSSI-Pegels einer oder mehrerer von dem Deaktivierungsknoten empfangener Nachrichten, und
Aufnehmen von Informationen über die bestimmten RSSI-Pegel in die an die Steuereinheit gesendete Deaktivierungsanforderung.

26. Verfahren nach einem der Ansprüche 21 bis 25, das ferner Folgendes umfasst, nachdem die Deaktivierungsanforderung an die Steuereinheit gesendet wurde:
Empfangen einer Anweisung von der Steuereinheit (140), ein Signal zu erzeugen, das die erfolgreiche Deaktivierung des Systems anzeigt; und
Erzeugen des Signals, das die erfolgreiche Deaktivierung des Systems anzeigt.

27. Verfahren nach einem der Ansprüche 21 bis 26, bei dem der Sender/Empfänger (610) der tragbaren Authentifizierungsvorrichtung in dem Fall abgeschaltet wird, dass die tragbare Authentifizierungsvorrichtung (300) als stillstehend gilt, und optional
der Sender/Empfänger (610) der tragbaren Authentifizierungsvorrichtung in einem abgeschalteten Zustand gehalten wird, bis der Prozessor (600) wieder feststellt, dass die tragbare Authentifizierungsvorrichtung in Bewegung ist,
und der Sender/Empfänger (610) der tragbaren Authentifizierungsvorrichtung eingeschaltet wird, sobald der Prozessor feststellt, dass die tragbare Authentifizierungsvorrichtung in Bewegung ist.

28. Verfahren nach einem der Ansprüche 21 bis 24, bei dem die tragbare Authentifizierungsvorrichtung (300):
periodisch aus einem Schlafzustand, in dem ihr Sender/Empfänger (610) inaktiv ist, in einen teilweise aktiven Zustand aufwacht, in dem nur ein Teil des Sender/Empfängers aktiviert ist, um eine RSSI-Überprüfung über einen ersten Zeitraum durchzuführen,
am Ende des ersten Zeitraums in den Schlafzustand zurückkehrt, es sei denn, die RSSI-Überprüfung zeigt einen RSSI-Pegel oberhalb eines vorbestimmten Schwellenwerts,
in dem Fall, dass die RSSI-Überprüfung einen RSSI-Pegel oberhalb eines vorbestimmten Schwellenwerts ergibt, über einen zweiten Zeitraum in dem teilweise aktiven Zustand bleibt und auf das Vorhandensein eines Synchronworts wartet,
in den Schlafzustand zurückkehrt, sofern nicht vor dem Ende des zweiten Zeitraums ein Synchronwort erfasst wird, und
ihren Sender/Empfänger über einen dritten Zeitraum vollständig aktiviert, wenn innerhalb des zweiten Zeitraums ein Synchronwort erfasst wird, und auf ein Wake-on-Radio-Paket wartet.

## Revendications

1. Dispositif d'authentification portatif (300) pour l'utilisation avec un système de surveillance de sécurité (100) pour un bâtiment (110) ou un espace sécurisé dans un bâtiment ou un autre bien immobilier, le système comprenant :
une unité de commande (140) pour la commande, l'activation et la désactivation du système de surveillance de sécurité ;
un détecteur (130, 290) pour la détection du franchissement d'une entrée donnant accès au bâtiment ou à l'espace sécurisé ;
un noeud de désactivation (270) pour la désactivation du système, le noeud de désactivation (270) présentant une interface utilisateur (485) pour recevoir une entrée utilisateur pour désactiver le système, et un émetteur radiofréquence (520) pour la transmission, en réponse à l'entrée utilisateur, d'un signal de désactivation à l'unité de commande (140) ; le dispositif d'authentification portatif (300) comprenant :
un émetteur-récepteur radiofréquence (610),
une mémoire (605) stockant une identification du dispositif d'authentification portatif,
un capteur de déplacement,
et un processeur (600) relié de manière fonctionnelle à l'émetteur-récepteur (610), au capteur de déplacement et à la mémoire ;
le capteur de déplacement étant réalisé de manière à détecter le déplacement du dispositif d'authentification portatif (300) et à fournir une sortie sur la base du déplacement détecté du dispositif d'authentification portatif (300), et le processeur (600) étant réalisé de manière à déterminer si le dispositif d'authentification portatif est stationnaire ou se déplace sur la base de la sortie du capteur de déplacement ;
le dispositif d'authentification portatif étant réalisé de manière à recevoir une instruction de désactivation provenant du noeud de désactivation (270) par l'intermédiaire de l'émetteur-récepteur (610), pour transmettre à l'unité de commande (140) une demande de désactivation contenant l'identification du dispositif d'authentification portatif ; et le processeur (600) étant réalisé de manière à transmettre la demande de désactivation instruite uniquement si le dispositif d'authentification portatif n'est pas considéré comme étant stationnaire lors de la réception de l'instruction.

2. Dispositif d'authentification portatif selon la revendication 1, le dispositif d'authentification portatif étant considéré comme étant stationnaire si le capteur de déplacement ne détecte aucun déplacement au moment de la réception de l'instruction.

3. Dispositif d'authentification portatif selon la revendication 1, le dispositif d'authentification portatif étant considéré comme étant stationnaire si le capteur de déplacement n'a détecté aucun déplacement du dispositif d'authentification portatif pendant une période prédéterminée précédant le moment de la réception de l'instruction.

4. Dispositif d'authentification portatif selon l'une des revendications précédentes, le dispositif d'authentification portatif (300) étant réalisé de manière à transmettre, à l'unité de commande (140), la demande de désactivation comprenant une identification de transmission de désactivation reçue dans l'instruction de désactivation provenant du noeud de désactivation (270).

5. Dispositif d'authentification portatif selon l'une des revendications précédentes, le dispositif d'authentification portatif (300) étant réalisé de manière :
à se réveiller périodiquement d'un état de veille, dans lequel son émetteur-récepteur (610) est inactif, à un état partiellement actif, dans lequel seulement une partie de l'émetteur-récepteur (610) est activée, pour effectuer une vérification RSSI pendant une première période ;
à revenir à l'état de veille à la fin de la première période, à moins que la vérification RSSI ne révèle un niveau RSSI supérieur à un seuil prédéterminé ;
à rester dans l'état partiellement actif pendant une deuxième période, au cas où la vérification RSSI révèle un niveau RSSI supérieur à un seuil prédéterminé, afin de détecter la présence d'un mot de synchronisation ;
à revenir à l'état de veille à moins qu'un mot de synchronisation n'est détecté avant la fin de la deuxième période ; et
à complètement activer l'émetteur-récepteur (610) pendant une troisième période, si un mot de synchronisation est détecté au cours de la deuxième période, pour attendre un paquet Wake-on-Radio, et facultativement
la durée de la période entre des événements de réveil étant d'au moins une seconde.

6. Dispositif d'authentification portatif selon l'une des revendications précédentes, le dispositif d'authentification portatif (300) étant en outre réalisé de manière à déterminer le niveau RSSI de chacun des plusieurs messages reçus en provenance du noeud de désactivation, et à inclure, dans la demande de désactivation envoyée à l'unité de commande, des informations concernant les niveaux RSSI déterminés.

7. Dispositif d'authentification portatif (300) selon l'une des revendications précédentes, le dispositif d'authentification portatif étant en outre réalisé de manière à recevoir, de l'unité de commande (140), une instruction autre qu'une instruction de désactivation par l'intermédiaire de l'émetteur-récepteur (610) laquelle inclut un drapeau pour réaliser une action, et, au cas où l'autre instruction inclut le drapeau, le processeur (600) étant réalisé de manière à amener le dispositif d'authentification portatif à réaliser l'action instruite, que le dispositif d'authentification portatif soit déterminé ou non comme étant stationnaire lors de la réception de l'instruction.

8. Dispositif d'authentification portatif selon la revendication 7, le dispositif d'authentification portatif (300) comprenant :
un indicateur visuel et/ou un transducteur audio et/ou un transducteur haptique, et étant en outre réalisé de manière à générer une sortie en utilisant un ou plusieurs de ces éléments lorsqu'il en est instruit par une instruction reçue comprenant le drapeau.

9. Dispositif d'authentification portatif selon l'une des revendications 1 à 7, le dispositif d'authentification portatif comprenant un transducteur haptique et étant en outre réalisée de manière à générer une sortie en utilisant le transducteur haptique en réponse à la réception de l'instruction de désactivation.

10. Dispositif d'authentification portatif selon l'une des revendications précédentes, l'émetteur-récepteur radiofréquence (610) du dispositif d'authentification portatif (300) étant réalisé de manière à recevoir l'instruction de désactivation sur une fréquence dans la bande de 869,7 à 870 MHz.

11. Dispositif d'authentification portatif selon l'une des revendications précédentes, le dispositif d'authentification portatif (300) étant réalisé de manière :
à recevoir l'instruction de désactivation sur un premier canal radio, l'instruction de désactivation comprenant des instructions pour transmettre le message de désactivation contenant l'identification du dispositif d'authentification portatif sur un deuxième canal radio, dont les paramètres de transmission sont différents de ceux du premier canal radio et sont spécifiés dans les instructions reçues ; et à commander l'émetteur-récepteur de sorte qu'il transmet le message contenant l'identification du dispositif d'authentification portatif sur le deuxième canal radio en utilisant les paramètres de transmission spécifiés, et facultativement
le dispositif d'authentification portatif (300) étant réalisé de manière à commander l'émetteur-récepteur (610) de sorte qu'il transmet le message contenant une identification de transmission de désactivation reçu dans l'instruction de désactivation.

12. Dispositif d'authentification portatif selon l'une des revendications précédentes, le dispositif d'authentification portatif (300) étant réalisé de manière à arrêter son émetteur-récepteur (610) dès que le dispositif d'authentification portatif est considéré comme étant stationnaire, et facultativement
le dispositif d'authentification portatif (300) étant réalisé de manière à ne pas remettre son émetteur-récepteur (610) en oeuvre avant que le processeur (600) ne détermine à nouveau que le dispositif d'authentification portatif se déplace.

13. Dispositif d'authentification portatif selon l'une des revendications précédentes, le capteur de déplacement comprenant un accéléromètre, facultativement un accéléromètre à trois axes.

14. Système de surveillance de sécurité (100) pour un bâtiment (110) ou un espace sécurisé dans un bâtiment ou un autre bien immobilier, le système (100) comprenant :
un détecteur (130, 290) pour la détection du franchissement d'une entrée donnant accès au bâtiment (110) ou à l'espace sécurisé ;
une unité de commande (140) ;
un noeud de désactivation (270) pour la désactivation du système, le noeud (270) présentant une interface utilisateur (485) pour recevoir une entrée utilisateur pour désactiver le système (100), et un émetteur radiofréquence (520) pour la transmission, en réponse à l'entrée utilisateur, d'un signal de désactivation à l'unité de commande (140) ;
et un dispositif d'authentification portatif (300) selon l'une des revendications 1 à 3 pour permettre la désactivation mains-libres du système de surveillance de sécurité ;
l'unité de commande (140) présentant un émetteur-récepteur radiofréquence (420, 430) et une mémoire (410) stockant une identification de dispositif d'authentification portatif pour le dispositif d'authentification portatif (300) ;
l'unité de commande (140) étant réalisée de telle sorte que :
en réponse à la réception d'une notification de franchissement d'une entrée provenant du détecteur (130),
(i) elle démarrer une minuterie de période d'entrée ;
(ii) elle transmet un message de réveil au noeud de désactivation pour amener l'émetteur RF du noeud de désactivation à transmettre un signal de réveil/une balise pour réveiller le dispositif d'authentification portatif ; et
(iii) en réponse à la réception, avant l'expiration de la minuterie de période d'entrée, d'un signal de désactivation radiofréquence provenant du dispositif d'authentification portatif et comprenant l'identité enregistrée du dispositif d'authentification portatif, elle désactive le système de surveillance de sécurité ; et
(iv) au cas où le système de surveillance de sécurité n'est pas désactivé avant l'expiration de la période d'entrée, elle fait passer le système de surveillance de sécurité dans un état d'alerte ;
(v) dans lequel soit l'unité de commande (140) est en outre réalisée de manière à démarrer une minuterie de désactivation mains libres en réponse à la réception d'une notification de franchissement d'entrée provenant du détecteur (130, 290), et au cas où aucun signal RF comprenant l'identité enregistrée du dispositif d'authentification portatif n'est reçu avant l'expiration de la minuterie de désactivation mains libres, à transmettre un signal au noeud (270) afin d'amener le noeud de désactivation à fournir une notification indiquant que la tentative de désactivation mains libres a échoué ; soit
(vi) le noeud de désactivation (300) est réalisé de manière à démarrer sa propre minuterie de désactivation mains libres en réponse à la réception du message de réveil de l'unité de commande et, au cas où la minuterie de désactivation mains libres du noeud de désactivation expire sans que le noeud de désactivation ait été informé par l'unité de commande de la désactivation du système de surveillance de sécurité, à fournir une notification indiquant que la tentative de désactivation mains libres a échoué.

15. Système de surveillance de sécurité selon la revendication 14, l'unité de commande (140) étant réalisée de manière :
à inclure une identification de transmission de désactivation dans le message de réveil, et le message de réveil étant réalisé de manière à amener le noeud de désactivation à inclure l'identification de transmission de désactivation dans le signal de réveil/la balise transmis(e) par l'émetteur RF du noeud de désactivation ;
à désactiver le système de surveillance de sécurité uniquement en réponse à la réception, avant l'expiration de la minuterie de période d'entrée, d'un signal de désactivation radiofréquence comprenant l'identité enregistrée du dispositif d'authentification portatif, provenant du dispositif d'authentification portatif, si le signal de désactivation comprend également l'identification de transmission de désactivation ; et
au cas où l'unité de commande (140) est réalisée de manière à démarrer une minuterie de désactivation mains libres, à transmettre un signal pour amener le noeud de désactivation (270) à fournir une notification indiquant que la tentative de désactivation mains libres a échoué, uniquement si aucun signal RF comprenant l'identité enregistrée du dispositif d'authentification portatif et l'identification de transmission de désactivation n'est reçu avant l'expiration de la minuterie de désactivation mains libres.

16. Système de surveillance de sécurité selon la revendication 14 ou 15, comprenant plusieurs noeuds de désactivation (300) chacun associés à une entrée différente donnant accès au bâtiment (110) ou à l'espace sécurisé, chaque noeud de désactivation présentant une identification de noeud de désactivation unique, chacune des différentes entrées présentant un détecteur respectif (130, 290) avec une identification respective différente, et l'unité de commande (140) stockant les identifications de noeud de désactivation, les identifications de détecteur, et une association entre chaque détecteur et l'un des noeuds de désactivation associé ;
l'unité de commande (140) étant réalisée de manière à utiliser, en réponse à la réception d'une notification de franchissement d'entrée provenant d'un détecteur (130, 290), une identification de détecteur incluse dans la notification reçue pour identifier le noeud de désactivation associé (270) et pour inclure l'identification de noeud de désactivation pour le noeud de désactivation identifié dans le message de réveil transmis, pour cibler sélectivement le noeud de désactivation identifié parmi les plusieurs noeuds de désactivation du système.

17. Système de surveillance de sécurité selon l'une des revendications 14 à 16, ledit ou chaque détecteur étant un détecteur de déplacement (290), par exemple un détecteur PIR.

18. Système de surveillance de sécurité selon l'une des revendications 14 à 17, ledit ou chaque détecteur étant un capteur de porte (130), par exemple un capteur de contact magnétique.

19. Système de surveillance de sécurité selon l'une des revendications 14 à 18, le dispositif d'authentification portatif (300) étant réalisé de manière :
à se réveiller périodiquement d'un état de veille, dans lequel son émetteur-récepteur (610) est inactif, à un état partiellement actif dans lequel seulement une partie de l'émetteur-récepteur est activée, pour effectuer une vérification RSSI pendant une première période ;
à revenir à l'état de veille à la fin de la première période, à moins que la vérification RSSI ne révèle un niveau RSSI supérieur à un seuil prédéterminé ;
à rester dans l'état partiellement actif pendant une deuxième période, au cas où la vérification RSSI révèle un niveau RSSI supérieur à un seuil prédéterminé, afin de détecter la présence d'un mot de synchronisation ;
à revenir à l'état de veille à moins qu'un mot de synchronisation n'est détecté avant la fin de la deuxième période ; et
à complètement activer son émetteur-récepteur (610) pendant une troisième période, si un mot de synchronisation est détecté au cours de la deuxième période, pour attendre un paquet Wake-on-Radio.

20. Système de surveillance de sécurité selon l'une des revendications 14 à 19, le dispositif d'authentification portatif (300) étant réalisé de manière à déterminer le niveau RSSI de chacun des plusieurs messages reçus en provenance du noeud de désactivation ; et
à inclure, dans la demande de désactivation envoyée à l'unité de commande, des informations concernant les niveaux RSSI déterminés, et facultativement
l'unité de commande (140) étant réalisée de manière désactiver le système de surveillance de sécurité en réponse à la réception du signal de désactivation radiofréquence du dispositif d'authentification portatif (300), uniquement si les information RSSI remplissent des critères prédéterminés.

21. Procédé de mise en oeuvre d'un dispositif d'authentification portatif (300) pour l'utilisation avec un système de surveillance de sécurité (100) pour un bâtiment (110) ou un espace sécurisé dans un bâtiment ou un autre bien immobilier, le système (100) comprenant :
une unité de commande (140) pour la commande, l'activation et la désactivation du système de surveillance de sécurité ;
un détecteur (130, 290) pour la détection du franchissement d'une entrée donnant accès au bâtiment ou à l'espace sécurisé ;
un noeud de désactivation (270) pour la désactivation du système, le noeud (270) présentant une interface utilisateur (485) pour recevoir une entrée utilisateur pour désactiver le système, et un émetteur radiofréquence (520) pour la transmission, en réponse à l'entrée utilisateur, d'un signal de désactivation à l'unité de commande (140), le dispositif d'authentification portatif (300) comprenant :
un émetteur-récepteur radiofréquence (610),
une mémoire (605) stockant une identification du dispositif d'authentification portatif,
un capteur de déplacement,
et un processeur (600) relié de manière fonctionnelle à l'émetteur-récepteur, au capteur de déplacement et à la mémoire ;
le procédé comprenant :
l'utilisation du capteur de déplacement pour détecter le déplacement du dispositif d'authentification portatif (300) ;
le fournissement d'une sortie sur la base du déplacement détecté du dispositif d'authentification portatif ;
la détermination, en utilisant le processeur (600), si le dispositif d'authentification (300) est stationnaire ou se déplace sur la base de la sortie du capteur de déplacement ;
la réception d'une instruction de désactivation provenant du noeud de désactivation (270) par l'intermédiaire de l'émetteur-récepteur (610), pour transmettre à l'unité de commande (140) une demande de désactivation contenant l'identification du dispositif d'authentification portatif ; et lors de la réception de l'instruction, la détermination si le dispositif d'authentification portatif (300) est considéré comme étant stationnaire ;
et à transmettre la demande de désactivation instruite uniquement si le dispositif d'authentification portatif n'est pas considéré comme étant stationnaire.

22. Procédé selon la revendication 21, l'instruction de désactivation reçue par l'émetteur-récepteur (610) comprenant une identification de transmission de désactivation et une instruction d'inclure l'identification de transmission de désactivation dans la demande de désactivation.

23. Procédé selon la revendication 21 ou la revendication 22, le dispositif d'authentification portatif (300) étant considéré comme étant stationnaire si le capteur de déplacement ne détecte aucun déplacement au moment de la réception de l'instruction.

24. Procédé selon la revendication 21 ou la revendication 22, le dispositif d'authentification portatif (300) étant considéré comme étant stationnaire si le capteur de déplacement n'a détecté aucun déplacement du dispositif d'authentification portatif pendant une période prédéterminée précédant le moment de la réception de l'instruction.

25. Procédé selon l'une des revendications 21 à 24, comprenant en outre :
la détermination du niveau RSSI de chacun des plusieurs messages reçus en provenance du noeud de désactivation et l'inclusion, dans la demande de désactivation envoyée à l'unité de commande, d'informations concernant les niveaux RSSI déterminés.

26. Procédé selon l'une des revendications 21 à 25, comprenant en outre, après la transmission de la demande de désactivation à l'unité de commande :
la réception d'une instruction de l'unité de commande (140) pour générer un signal indiquant la désactivation réussie du système ; et
la génération du signal indiquant le désactivation réussie du système.

27. Procédé selon l'une des revendications 21 à 26, comprenant l'arrêt de l'émetteur-récepteur (610) du dispositif d'authentification portatif au cas où le dispositif d'authentification portatif (300) est considéré comme étant stationnaire, et facultativement,
le maintien de l'émetteur-récepteur (610) du dispositif d'authentification portatif dans un état d'arrêt jusqu'à ce que le processeur (600) détermine à nouveau que le dispositif d'authentification portable se déplace ;
et la mise en oeuvre de l'émetteur-récepteur (610) du dispositif d'authentification portatif dès que le processeur détermine que le dispositif d'authentification portatif se déplace.

28. Procédé selon l'une des revendications 21 à 24, le dispositif d'authentification portatif (300) :
se réveillant périodiquement d'un état de veille, dans lequel son émetteur-récepteur (610) est inactif, à un état partiellement actif dans lequel seulement une partie de l'émetteur-récepteur est activée, pour effectuer une vérification RSSI pendant une première période ;
revenant à l'état de veille à la fin de la première période, à moins que la vérification RSSI ne révèle un niveau RSSI supérieur à un seuil prédéterminé ;
restant dans l'état partiellement actif pendant une deuxième période, au cas où la vérification RSSI révèle un niveau RSSI supérieur à un seuil prédéterminé, et attendant la présence d'un mot de synchronisation ;
revenir à l'état de veille à moins qu'un mot de synchronisation n'est détecté avant la fin de la deuxième période ; et
activant complètement son émetteur-récepteur pendant une troisième période, si un mot de synchronisation est détecté au cours de la deuxième période, et attendant un paquet Wake-on-Radio.
